(19) Europäisches Patentamt
European Patent Office
Office européen des brevets

(11) **EP 4 256 730 B1**

(12) **EUROPÄISCHE PATENTSCHRIFT**

(45) Veröffentlichungstag und Bekanntmachung des Hinweises auf die Patenterteilung:
**03.09.2025   Patentblatt 2025/36**

(21) Anmeldenummer: **21834722.7**

(22) Anmeldetag: **30.11.2021**

(51) Internationale Patentklassifikation (IPC):
**H04J 3/06** (2006.01)        **H04L 43/08** (2022.01)
**H04L 45/00** (2022.01)       **H04L 12/40** (2006.01)

(52) Gemeinsame Patentklassifikation (CPC):
**H04J 3/0667; H04L 12/40176; H04L 43/0852; H04L 2012/40273**

(86) Internationale Anmeldenummer:
**PCT/DE2021/200225**

(87) Internationale Veröffentlichungsnummer:
**WO 2022/117166 (09.06.2022 Gazette 2022/23)**

(54) **VERFAHREN ZUR ERMITTLUNG DER STEUERGERÄTETEMPERATUR DURCH EIN ZEITSYNCHRONISATIONSPROTOKOLL**

METHOD FOR DETERMINING THE TEMPERATURE OF AN ECU BY A TIME SYNCHRONIZATION PROCOTOL

PROCEDE DE DETERMINATION DE LA TEMPERATURE D'UNE ECU PAR UN PROCOTOL DE SYNCHRONISATION DU TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **02.12.2020   DE 102020215247**

(43) Veröffentlichungstag der Anmeldung:
**11.10.2023   Patentblatt 2023/41**

(73) Patentinhaber: **Continental Automotive Technologies GmbH**
**30175 Hannover (DE)**

(72) Erfinder: **ZINNER, Helge**
**60488 Frankfurt am Main (DE)**

(74) Vertreter: **Aumovio Corporation**
**Continental Automotive Technologies GbH**
**Putzbrunner Straße 69**
**81739 München (DE)**

(56) Entgegenhaltungen:
WO-A1-2018/014970        DE-A1- 102008 061 710
DE-A1- 102015 206 085        DE-A1- 102016 219 663
DE-A1- 102017 219 209        US-A1- 2015 098 476
US-A1- 2019 205 272

- HYUNG-TAEK LIM ET AL: "IEEE 802.1AS time synchronization in a switched Ethernet based in-car network", VEHICULAR NETWORKING CONFERENCE (VNC), 2011 IEEE, IEEE, 14 November 2011 (2011-11-14), pages 147 - 154, XP032081880, ISBN: 978-1-4673-0049-0, DOI: 10.1109/VNC.2011.6117136
- ANDREAS KERN ET AL: "Accuracy of Ethernet AVB time synchronization under varying temperature conditions for automotive networks", DESIGN AUTOMATION CONFERENCE (DAC), 2011 48TH ACM/EDAC/IEEE, IEEE, 5 June 2011 (2011-06-05), pages 597 - 602, XP031927788, ISBN: 978-1-4503-0636-2

EP 4 256 730 B1

**Beschreibung**

FELD

Die vorliegende Erfindung betrifft ein Verfahren zur Ermittlung der Steuergerätetemperatur durch ein Zeitsynchronisationsprotokoll

HINTERGRUND

Ethernet-Technologien werden zunehmend in Fahrzeugen eingesetzt und ersetzen dort ältere bzw. proprietäre Datenverbindungen und -busse. Ethernet-Verbindungen unterstützen auf dem Layer 3 des OSI-Schichtenmodells eine Vielzahl von Vermittlungsprotokollen für die Übertragung von Datenpaketen zwischen Sendern und Empfängern. In den höheren Protokollschichten erfolgt die Segmentierung des Datenstroms in Pakete, die Prozesskommunikation zwischen miteinander kommunizierenden Systemen, die Übersetzung von Daten in eine systemunabhängige Form und schließlich die Bereitstellung von Funktionen für Anwendungen.

Es wird zurzeit an der nächsten E/E-Architekturausprägung, der sog. "Zone Oriented Architektur" und "Server based Architecture" gearbeitet. Der Unterschied zu einer heutigen Architektur besteht darin, dass Steuergeräte an bestimmten Geopositionen positioniert sind, um dort Sensordaten aufzusammeln. Der bedeutende Unterschied zu herkömmlichen Architekturen besteht darin, dass die Rechenleistung und sämtliche Funktionen auf den zentralen Server-ECUs konsolidiert werden, d.h. nur auf diesen Steuergeräten wird Anwendungssoftware ausgeführt. Alle restlichen ECUs, die sogenannten Zonencontroller sammeln "lediglich" Daten von den verschiedenen Sensoren auf.

Die Konsolidierung der Funktionen auf sehr wenige Steuergeräte (Server) bedeutet das viel mehr Rechenleistung pro ECU notwendig sein wird. Um diese Rechenleistung abschätzen zu können ist es bekannt, welche Rechenleistung von welchem System on Chip zur Verfügung gestellt wird.

Fast alle in Fahrzeugen eingesetzten Ethernet-Kommunikationsnetzwerke nutzen ein Protokoll zur Zeitsynchronisation, das eine in allen Netzwerkgeräten synchrone globale Zeitbasis des Netzwerks bereitstellt. Der Verbreitungsgrad zeitlich synchronisierter Netzwerkgeräte wird in Zukunft weiter zunehmen. Eine der größten Herausforderungen dieser neuen Server-ECUs ist die Ableitung von Wärme. Die leistungsstarken (Grafik)-Prozessoren verlangen nach neuen umfangreichen Kühlkonzepten wie bspw. auch Wasserkühlung wie sie derzeit eingeplant sind und bei in einigen Fahrzeugen Tesla heute schon in Serie eingeführt wurde.

Das Management und die Diagnose der ECUs und deren Funktionen wird im Hinblick auf die immer stärker ansteigenden Safety-Anforderungen eine noch bedeutendere Rolle als heute einnehmen. Das frühzeitige Erkennen von Fehlern und kritischen Situationen spielt dabei eine wichtige Rolle. Die Hersteller von Elektronikbauteilen werden in Zukunft mehr Verantwortung in der Automobilzulieferindustrie übernehmen müssen. Sie entwickeln und fertigen immer komplexere, innovative Baugruppen, die in der Lieferkette als Black-Box an den Fahrzeughersteller weitergereicht werden. Spannend wird die Frage bleiben, ob die notwendige Überwachungselektronik nur echte Bauteilfehler erkennt, oder auch einwandfrei funktionierende Fahrzeugkomponenten getauscht werden müssen, weil vor dem Hintergrund der funktionalen Sicherheit ein Zweifel an deren Zuverlässigkeit besteht. Wenn sich dann nach eingehender Analyse herausstellt, dass die getauschten Teile einwandfrei funktionieren, so hat dies dennoch Auswirkungen auf die Lieferkette. Mit Hinblick auf Gewährleistungsfristen und zukünftige Serviceverträge wird diese Frage aber nicht den Autofahrer sorgen, dessen Fahrzeug quasi über Nacht zu seiner größten Zufriedenheit immer wieder automatisch nachgebessert wird.

Zusätzlich dazu nehmen die Anzahl der Steuergeräte und deren Vernetzung untereinander kontinuierlich zu. Neben den eigentlichen Steuerungsfunktionen haben Diagnosefunktionen eine immer größere Bedeutung bekommen. Übernahm die Diagnose ursprünglich nur eine Kontrollfunktion für die Einhaltung gesetzlicher Abgasstandards, kommt sie heute in der gesamten Wertschöpfungskette der Fahrzeughersteller zum Einsatz: In der Entwicklung, bei Test und Validierung, in der Produktion und schließlich im Kundenservice. Auch die Komfortfunktionen moderner Fahrzeuge basieren zum großen Teil auf Diagnosefunktionen.

Der IEEE 802.1AS-Standard stellt ein solches Protokoll zur Zeitsynchronisation bereit. Ausgehend von einer sogenannten "besten Uhr" im Netzwerk, auch als Grandmaster oder Grandmaster Clock bezeichnet, wird eine Master-Slave-Uhrenhierarchie aufgebaut. Der Grandmaster stellt dabei die Zeitbasis für das Netzwerk bereit, auf die alle anderen Netzwerkgeräte des Netzwerks sich synchronisieren. Der Grandmaster wird mittels des sogenannten Best Master Clock Algorithmus (BMCA) bestimmt und innerhalb des Netzwerks bekanntgegeben. Dazu senden IEEE 802.1AS-fähige Netzwerkgeräte Announce-Nachrichten mit Informationen über ihre interne Uhr an unmittelbar angeschlossene weitere Netzwerkgeräte. Die Informationen über die internen Uhren geben Aufschluss auf die Genauigkeit der jeweiligen Uhr, deren Bezug oder Zeitreferenz sowie andere Eigenschaften, anhand derer die beste Uhr in dem Netzwerk bestimmt werden kann. Ein Empfänger einer solchen Announce-Nachricht vergleicht die empfangenen Informationen mit den Merkmalen seiner eigenen internen Uhr und evtl. bereits von einem anderen Port empfangenen Nachrichten mit Informationen zu Uhren anderer Netzwerkgeräte, und akzeptiert eine in einem anderen Netzwerkgerät befindliche Uhr, wenn diese bessere Uhrenparameter hat. Nach kurzer Zeit ist die beste Uhr in dem Netzwerk ermittelt, die dann der Grandmaster in dem Netzwerk wird. Ausgehend von dem Grandmaster werden Nachrichten zur Zeitsynchronisation über das Netzwerk verbreitet. Ein Netzwerkgerät das eine Nachricht zur Zeitsynchronisation empfängt leitet diese nicht einfach weiter, sondern korrigiert die Zeitinformation um die zuvor ermittelte Laufzeit auf der Verbindung, über die es Nachrichten zur Zeitsynchronisation von einem direkt verbundenen Netzwerkgerät empfängt, sowie um die interne Bearbeitungsdauer, bevor es die Nachricht zur Zeitsynchronisation mit der korrigierten Zeitinformation weitersendet.

Bei der Uhrenhierarchie gemäß IEEE 802.1AS und dem darin festgelegten "generalized precision time protocol" (gPTP) stellt immer nur ein einziges Netzwerkgerät die beste Uhr des Netzwerkes bereit. Dieses Netzwerkgerät steuert und regelt somit die gesamte Zeit des Fahrzeugs. Alle anderen Uhren in Netzwerkgeräten des Netzwerkes richten sich ausschließlich nach dieser einen Uhr. Einige Fahrzeughersteller synchronisieren sogar Netzwerke anderer Standards, bspw. CAN, über diesen Ethernet-Zeitmaster, so dass fast allen Netzwerkgeräten des Fahrzeugs von dem den Grandmaster bereitstellenden Netzwerkgerät die Systemzeit mitgeteilt wird. Dadurch ist in dem Netzwerk bzw. dem Fahrzeug ein einzelnes Netzwerkgerät als Single Point of Failure festgelegt, dessen Ausfall oder Manipulation gravierende Auswirkungen auf die Betriebssicherheit des Fahrzeugs haben kann. So müssen bspw. in Fahrzeugen mit einem hohen Grad an Fahrerunterstützung durch entsprechende Systeme oder mit Systemen für das (Teil-) Autonome Fahren eine Vielzahl von innerhalb eines engen Zeitfensters erfassten Sensordaten gemeinsam verarbeitet werden, um entsprechende Ansteuersignale für Aktoren des Fahrzeugs abzuleiten. Auch für Dokumentationszwecke kann eine möglichst genaue Zeiterfassung von Sensordaten von großer Bedeutung sein, bspw. bei der Speicherung in Log-Dateien, durch deren Analyse Fehlfunktionen oder Fehlbedienungen rekonstruiert werden können. Letzteres ist insbesondere für Versicherungen und Strafverfolgungsbehörden von hohem Interesse. Daher ist eine sichere synchronisierte Bereitstellung der Zeitinformation unverzichtbar.

Zusätzlich dazu nehmen die Anzahl der Steuergeräte und deren Vernetzung untereinander kontinuierlich zu. Neben den eigentlichen Steuerungsfunktionen haben Diagnosefunktionen eine immer größere Bedeutung bekommen. Übernahm die Diagnose ursprünglich nur eine Kontrollfunktion für die Einhaltung gesetzlicher Abgasstandards, kommt sie heute in der gesamten Wertschöpfungskette der Fahrzeughersteller zum Einsatz: In der Entwicklung, bei Test und Validierung, in der Produktion und schließlich im Kundenservice. Auch die Komfortfunktionen moderner Fahrzeuge basieren zum großen Teil auf Diagnosefunktionen.

Das Management und die Diagnose der ECUs und deren Funktionen wird im Hinblick auf die immer stärker ansteigenden Safety-Anforderungen eine noch bedeutendere Rolle als heute einnehmen. Das frühzeitige Erkennen von Fehlern und kritischen Situationen spielt dabei eine wichtige Rolle.

Es wird bereits an Konzepten gearbeitet, um Funktionen und Anwendungen auf andere Steuergeräte/Prozessoren dynamisch auszulagern, um diese zu optimieren. Dies wird als Live-Migration, Reallokation oder Migration bezeichnet.

Aus dem Stand der Technik sind einige Ansätze zur Erkennung von Änderungen der Konfiguration oder Struktur eines Kommunikationsnetzwerks unter Nutzung der Zeitsynchronisation des Netzwerks bekannt. Eine unautorisierte Änderung der Konfiguration des Netzwerks kann bspw. das Zwischenschalten eines Netzwerkgeräts zur Vorbereitung eines Angriffs umfassen, das Nachrichten zur Analyse abfängt und ggf. veränderte Nachrichten weitersendet. Dies kann dazu genutzt werden, den sicheren und ordnungsgemäßen Betrieb zu verhindern oder zumindest zu stören.

Durch die neuen Architekturen gibt es nun erstmal Möglichkeiten Software auch auf verschiedenen ECUs zu implementieren da die Hardware generalisierter wird und die Software plattformunabhängiger. (Natürlich ist dies nicht mit allen Funktionen und ECUs möglich). Es steht also zur Designzeit des Systems nicht immer fest auf welchem Steuergerät (Server) welche Software laufen wird.

Eine der größten Herausforderungen der neuen Server-ECUs ist die Ableitung von Wärme. Die leistungsstarken (Grafik)-Prozessoren verlangen nach neuen umfangreichen Kühlkonzepten wie bspw. Wasserkühlung.

Die Umsetzung einer kostengünstigen Wärmeableitung und Überwachung der neuen Server-ECUs stellen eine neue Herausforderung für die Automobilbranche dar. Gerade diese neuen Server-ECUs bilden den Kern des Netzwerkes resp. es sind die einzigen und zentralen Steuergeräte in der Zukunft im Fahrzeug - ein abschalten bei Problemen ist ohne weiteres kaum möglich, da diese zum automatisierten Fahren benutzt werden, um bspw. Sensordaten zu fusionieren und hochkomplexe Berechnungen auszuführen usw..

Beim autonomen Fahren erhöhen sich zusätzlich die Anforderungen an die Zuverlässigkeit aller Teilsysteme nochmals. Bei der Absicherung aller Teilsysteme spielen gerade die erweiterten Diagnosefunktionen eine wichtige Rolle. Die sich immer weiter erhöhende Komplexität erfordert stetig den Austausch von Diagnose-Daten und diese müssen auch sicher und fehlerfrei zugestellt werden. Eine Herausforderung der nächsten Jahre wird die zum einen sichere und zuverlässige Übertragung von Statusinformationen sein und zum anderen die redundante Bereitstellung und Übertragung dieser Daten. Dazu werden neue Netzwerkmanagementkonzepte entstehen, die stets einen Gesamtüberblick über das System haben und teilweise auch aus der Cloud heraus aktive werden.

Das frühzeitige Erkennen von Fehlern und kritischen Situationen spielt dabei eine wichtige Rolle. Die Hersteller von Elektronikbauteilen werden in Zukunft mehr Verantwortung in der Automobilzulieferindustrie übernehmen müssen. Sie entwickeln und fertigen immer komplexere, innovative Baugruppen, die in der Lieferkette als Black-Box an den Fahrzeughersteller weitergereicht werden. Bei der Funktionsprüfung wird eine Aufgabe sein, ob die notwendige Überwachungselektronik nur echte Bauteilfehler erkennt, oder einwandfrei funktionierende Fahrzeugkomponenten getauscht werden müssen, weil vor dem Hintergrund der funktionalen Sicherheit ein Zweifel an deren Zuverlässigkeit besteht. Wenn sich dann nach eingehender Analyse herausstellt, dass die getauschten Teile einwandfrei funktionieren, so hat dies dennoch Auswirkungen auf die Lieferkette. Mit Hinblick auf Gewährleistungsfristen und zukünftige Serviceverträge wird diese Frage aber nicht den Autofahrer sorgen, dessen Fahrzeug quasi über Nacht zu seiner größten Zufriedenheit immer wieder automatisch nachgebessert wird.

Zusätzlich dazu nehmen die Anzahl der Steuergeräte und deren Vernetzung untereinander kontinuierlich zu. Neben den eigentlichen Steuerungsfunktionen haben Diagnosefunktionen eine immer größere Bedeutung bekommen. Übernahm die Diagnose ursprünglich nur eine Kontrollfunktion für die Einhaltung gesetzlicher Abgasstandards, kommt sie heute in der gesamten Wertschöpfungskette der Fahrzeughersteller zum Einsatz: In der Entwicklung, bei Test und Validierung, in der Produktion und schließlich im Kundenservice. Auch die Komfortfunktionen moderner Fahrzeuge basieren zum großen Teil auf Diagnosefunktionen.

Eine mögliche Überhitzung von ECUs stellt ein noch größeres Problem in der Zukunft dar. Die frühzeitige Diagnose mittels mehrerer redundanter Technologien ist notwendig, um die zukünftigen Anforderungen an Sicherheit und Safety zu erfüllen. Das Steuergerät kann nicht mehr Software ausführen, wenn es dadurch an seine Kapazitätsgrenzen gelangt.

US 2016 285 462 offenbart eine Methode zur Herstellung eines Oszillators, einschließlich eines Resonatorelements, eines Schwingungskreises, der ein Schwingungssignal durch Oszillieren des Resonatorelements ausgibt, eines Temperaturkompensationskreises, der die Temperaturmerkmale einer Frequenz des Schwingungssignals in einem gewünschten Temperaturbereich ausgleicht, umfasst einen ersten Temperaturkompensationsschritt, bei dem die Frequenz bei mehreren Temperaturen gemessen wird und erste Temperaturkompensationsdaten auf der Grundlage eines Verhältnisses zwischen Temperatur und Frequenz berechnet werden, und eine zweite Temperaturkompensationsstufe durchführen, bei der nach der ersten Temperaturkompensationsstufe die Frequenz, die durch eine Temperaturkompensation durch den Temperaturkompensationskreislauf auf der Grundlage der ersten Temperaturkompensationsdaten bei mehreren Temperaturen ermittelt wird, und die zweite Temperaturkompensationsdaten auf der Grundlage eines Verhältnisses zwischen Temperatur und Frequenz gemessen werden.

In der WO 2014111920 A1 wird eine Methode und ein Gerät zur Verwendung mit einem Host-Computer angegeben, das Nachrichten mit einem Computer-Peripheriegerät über einen Computer-Bus kommuniziert, wobei das Peripheriegerät in mehreren Zuständen sein kann. Das Peripheriegerät kann ein Ein- oder Ausgabegerät oder ein Massenspeichergerät wie ein Festplattenlaufwerk sein. Das Gerät kommuniziert mit dem Host-Computer und dem Computer-Peripheriegerät über ein proprietäres Protokoll oder einen Bus nach Industriestandard, das auf einer Punkt-zu-Punkt-seriellen Kommunikation wie SATA basieren kann. Der periphere Zustand wird anhand der Überwachung der über den Bus übertragenen Nachrichten und des Sensors im Zusammenhang mit dem peripheren Betrieb bestimmt. Der Sensor kann ein Mikrofon oder eine Kamera sein, und das System kann eine Sprach- oder Bildverarbeitung umfassen. Der Vergleich kann eine Funktionsstörung oder eine vermutete Operation nach einem vordefinierten Schema vermuten lassen, und es wird ein Signal erzeugt.

DE 10 2015 206085 A1 offenbart eine Überwachung von Knoten durch Bestimmung von Zeitpunkten aus denen Zeitdifferenzen bestimmt werden. Zeitdifferenzen ( "w1","w2") werden nur verglichen, wenn durch Temperatursensoren bestimmte Temperaturen innerhalb eines Toleranzbereichs liegen

DE 10 2016 219663 A1 der Anmelderin offenbart die Überwachung eines Bordnetzes durch Prüfung von unter anderen Temperaturmesswerten.

HYUNG-TAEK LIM ET AL: "IEEE 802.1AS time synchronization in a switched Ethernet based in-car network", VEHICULAR NETWORKING CONFERENCE (VNC), 2011 IEEE, IEEE, 14.

November 2011 (2011-11-14), Seiten 147-154, XP032081880, DOI: 10.1109/VNC.2011.6117136 ISBN: 978-1-4673-0049-0 offenbart generell gesprochen die Zeitsynchronisation eines Bordnetzes.

US 2019/205272 A1 offenbart ein Rechnernetz für Kraftfahrzeuge, das auf fehlende Synchronisationsverbindung überwacht wird. Falls keine Synchronisationsverbindung vorliegt, wird aus einer Temperaturmessung eine Korrektur der Frequenz abgeleitet.

Aufgabe der Erfindung ist es, technische Lösungen für die nächste Generation der Server-ECUs anzubieten. Aufgabe der Erfindung ist es, weitere, schnellere und redundante Diagnosemöglichkeiten für die Umsetzung der stromfressenden ECUs anzubieten. Der Ausfall von Temperatursensoren würde sofort zum Ausfall der ECU führen, weshalb die Erfindung weitere Verfahren zur Temperaturüberwachung vorschlägt. Dabei sollen zusätzliche intelligente Mechanismen vorgeschlagen werden die frühzeitig auf Fehler hinweisen.

Vorteilhaft wird durch die Erfindung auch das Problem gelöst, dass der Ausfall von Temperatursensoren sofort zum Ausfall der ECU führen würde, weshalb die Erfindung ein Verfahren zur Temperaturüberwachung vorteilhaft vorschlägt. Dabei werden zusätzliche intelligente Mechanismen vorgeschlagen, die frühzeitig auf Fehler hinweisen.

Vorteilhaft wird durch das vorgeschlagene Verfahren eine Überwachungsfunktion für Steuergeräte zur Verfügung gestellt, die entweder keine haben, einen Defekt in der Überwachung haben oder die Überwachung nicht vertrauenswürdig ist und plausibilisiert werden muss.

Gegenwärtig kann bis heute keine Temperatur ohne Sensoren gemessen werden. Die Anmeldung schlägt vorteilhaft vor, das zur Temperaturermittlung keine Temperatursensoren benötigt werden. Des Weiteren wird eine Safetyfunktion für die Steuergeräte im Bordnetz ermöglicht.

BESCHREIBUNG

Diese Aufgabe wird durch das in Anspruch 1 angegebene Verfahren und das in Anspruch 13 angegebene Ethernetzwerk gelöst. Ausgestaltungen und Weiterentwicklungen sind in jeweiligen abhängigen Ansprüchen angegeben.

Die Anmeldung schlägt einen neuartigen intelligenten Mechanismus vor um die Temperaturveränderung resp. die Hitzeentwicklung der Steuergeräte zu monitoren. Dabei verwendet die Erfindung das Ethernet basierte Zeitsynchronisationsprotokoll um Veränderungen der ECU Temperatur zu erkennen.

Die Ethernet basierte Zeitsynchronisation (wird im Einsatz sein bei allen hochperformaten ECUs) wird durch das IEEE802.1AS Protokoll realisiert. Dabei gibt in jeder ECU immer ein Quarz den Takt an eine PLL, welche dann per Software auf die beste Uhr des Netzwerkes angeglichen wird. Quarze werden durch die Umgebungstemperatur beeinflusst (sehr viel stärker als das Alter - ca. 2 Potenzen mehr).

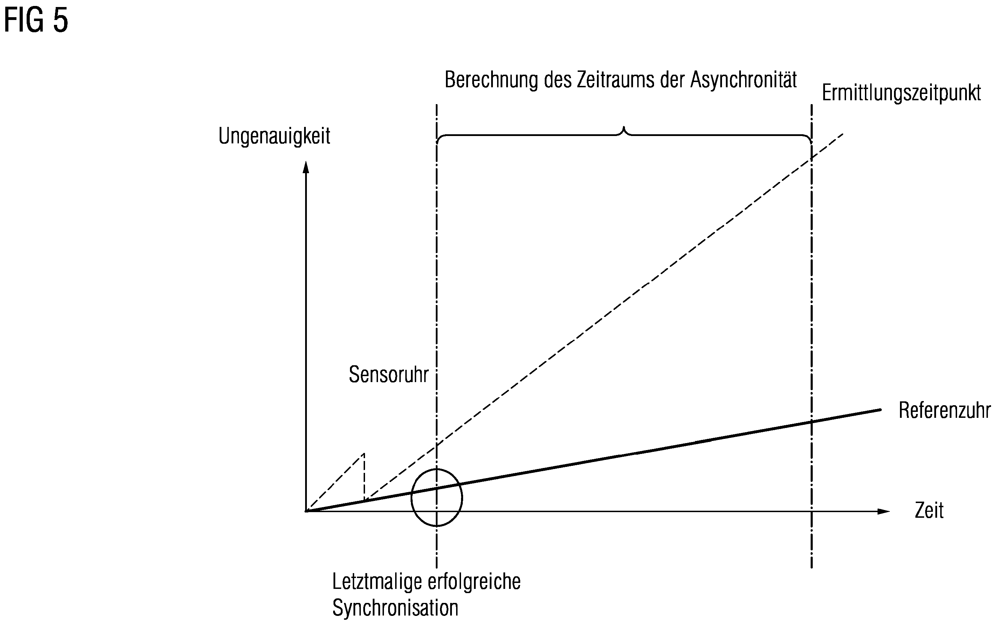

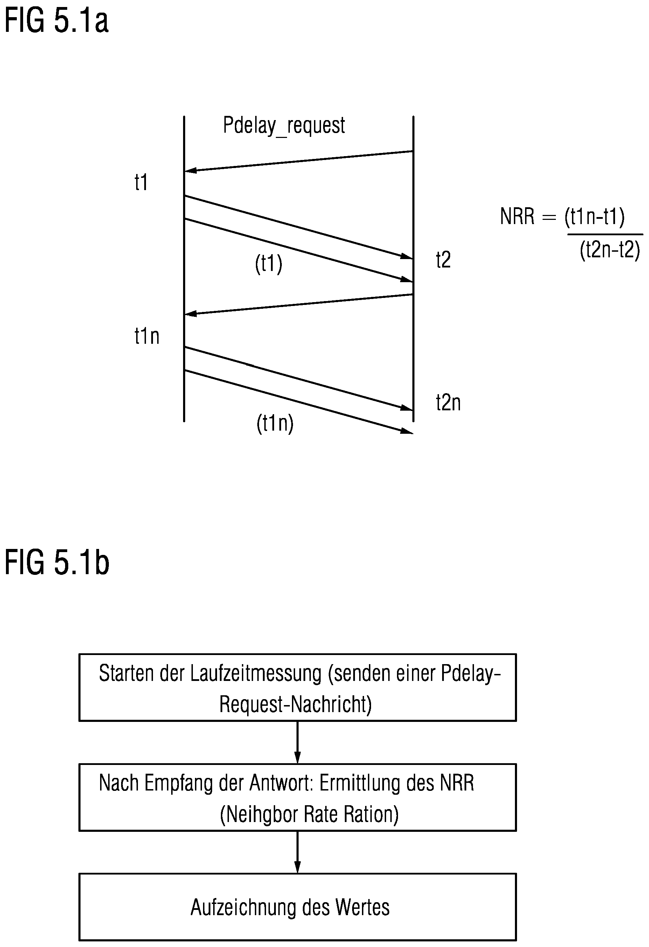

Die physikalischen Eigenschaften eines Quarzes und seiner Güte sind ausschlaggebend für die Genauigkeit der Zeitsynchronisation (z. B. PTP), dessen Basis die Schwingungen des Quarzes darstellt. Den höchsten Einfluss auf den Quarz und dessen Genauigkeit hat die Temperatur. Die geringsten Abweichungen von seiner Spezifikation hat ein typischer Quarz bei mittlerer Raumtemperatur von +25 °C. Die Anzahl der Schwingungen wird geringer, wenn die Außentemperatur abnimmt, und er schwingt schneller bei Zunahme der Außentemperatur, welche den Quarz aufheizt. Abbildung 5 zeigt den Einfluss der Temperatur auf AT-Cut Quarze.

Die Spezifikation von IEEE 802.1AS empfiehlt einen Quarz mit einer Güte nicht schlechter als $\pm100$ ppm. AT-Schnitt-Quarze zeichnen sich dadurch aus, dass deren Schwingung über die Temperaturveränderung einer kubischen Kurve entspricht. Dadurch kann der Quarz auch über größere Temperaturbereiche stabil arbeiten, im Vergleich zu anderen Quarztypen.

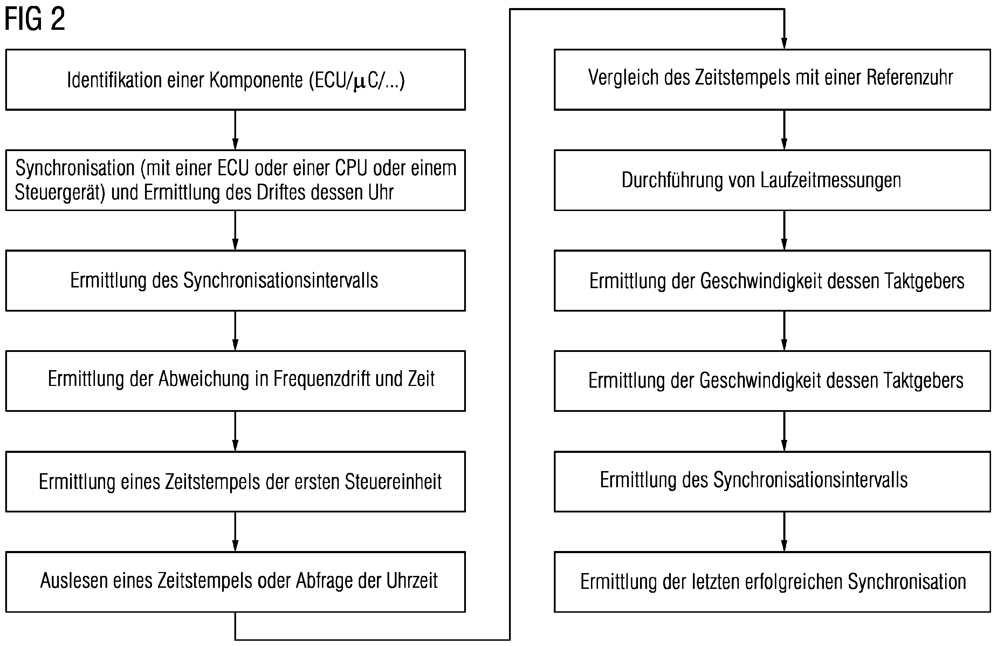

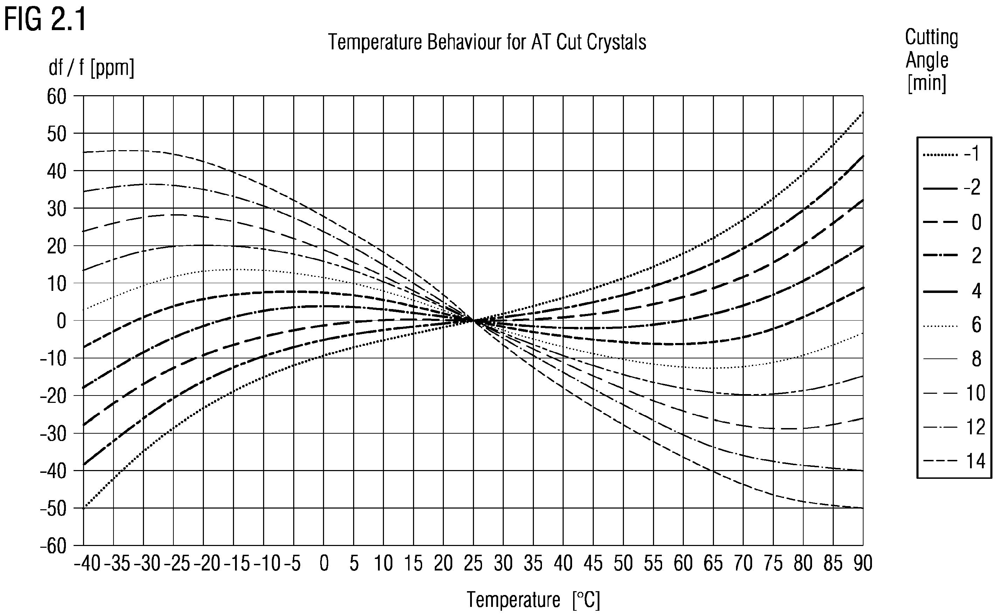

Die generelle Überlegung der Erfindung ist wie in kurz in Figur 2 dargestellt. Durch Laufzeitmessungen mit der zu untersuchenden Komponente wird die Taktrate dessen Ethernet-Quarzes ermittelt und fortlaufend beobachtet (das erfordert keinen weiteren Nachrichtenaustausch oder Protokolle) und auf Basis der Veränderung der Taktrate kann die Umgebungstemperatur in dieser ECU bestimmt werden, da diese direkten Einfluss auf den Quarz hat.

Die wesentlichen Vorteile der Erfindung ergeben sich daraus, dass zusätzliche redundante Mechanismen implementiert werden, die ohne zusätzlich Protokolle auskommt und die die Diagnosefähigkeit unserer Steuergeräte weiter erhöht. Das Zeitsynchronisationsprotokoll hat einen sehr geringen Datenbrauch und wird mit einer hohen Frequenz sowieso übertragen. Das Verfahren bietet ein konstantes Monitoring ohne zusätzliche Buslast oder neue Protokolle.

Dieses Verfahren kann insbesondere in Form einer Software implementiert sein, die als Update oder Upgrade zu bestehender Software oder Firmware von Teilnehmern am Netzwerk vertrieben werden kann und insofern ein eigenständiges Produkt darstellt. Das Verfahren kann per OTA in schon bestehende und ausgelieferte Steuergeräte geflashed werden, die bspw. auch keinen Temperatursensor haben oder bei dem er defekt ist oder nicht mehr zuverlässig arbeitet. Dadurch könnten sogar Kosten eingespart werden.

Erkennung ob beispielsweise ein Nachbarsteuergerät besonderer Gefahr ausgesetzt ist wie zu hoher oder zu niedriger Temperatur, einem Fehler oder Angriff.

Durch die Erkennung von Modifikationen im Netzwerk wird eine weitere Methode geschaffen, um die Datensicherheit und funktionale Sicherheit im Bordnetz zu gewährleisten. Sollte beispielsweise ein modifiziertes Steuergerät eingesetzt werden, so ist dies augenscheinlich weder dem Fahrer noch der Werkstatt wirklich bewusst - das Netzwerk und die Steuergeräte können aber auf Basis der in dieser Erfindung beschriebenen Methoden Fehler identifizieren. Durch Nutzung von Protokollen und bestehenden Grundfunktionen im Standard Ethernet TSN oder AVB sind keine Modifikationen im Protokollablauf notwendig. Das heißt, hiermit wird weder die Buslast erhöht noch sind beim Sender etwaige Modifikationen in Hardware oder Software notwendig.

Das Verfahren und das daraus resultierende Steuergerät sind gerade für automobilen Einsatz interessant da das Thema Zuverlässigkeit und Safety über Ethernet eine große Bedeutung im Automobil hat und zunehmend bekommen wird. In den nächsten Jahren werden die Sensoren (Kamera und Radar) auch unkomprimierte Daten über Ethernet verschicken. Mit einer solchen Datenrate sind weitere Techniken notwendig, um das Ethernet-System ausfallsicherer und performanter zu machen. Die Erfindung trägt hierzu bei, um diese Anwendungen zu ermöglichen.

Ein bestehendes Problem heute und mit jedem neuen System ist die Abhängigkeit zu den Kommunikationsschnittstellen und deren Unterstützung. Mit der hier beschriebenen Erfindung kann viel plattformunabhängiger entwickelt werden, und es kann hierdurch eine Verlängerung der Lebenszyklen bestehenden SW Plattformen und Controller erzielt werden.

Durch frühzeitigere Erkennung von Fehler mittels einer indirekten frühen Analyse durch das Ethernet-Protokoll lassen sich Temperaturveränderungen blitzschnell ermitteln. Das erfindungsgemäße Netzwerksystem ist im Hinblick auf Kosten und Zuverlässigkeit verbessert. Die Testbarkeit des Systems wird durch die Erfindung klarer definiert und dadurch können Testkosten gespart werden. Zudem bietet die Erfindung eine transparente Sicherheitsfunktionalität. Eine weitere Einsatzmöglichkeit des Verfahrens liegt in Gebieten, in denen mit Hardwarebasierte Zeitsynchronisation Quarze verwendet werden und bei denen die Taktrate remote ermittelt werden kann.

Das Verfahren zur Absicherung der Zeitsynchronisation in einem Server ECU in welchem eine Zeitsynchronisation gemäß einem Zeitsynchronisationsstandard erfolgt, umfasst, eine Initialisierung der Zeitsynchronisation der Komponenten der Server ECU, das Speichern einer eindeutigen Uhrenidentifikation einer bei der Initialisierung ermittelten Grandmaster Clock in jedem der Komponenten der Server ECU, das nicht die zuvor ermittelte Grandmaster Clock bereitstellt, die Identifikation eines Schatten-Controller, der aus den Komponenten der Server ECU ausgewählt wird; das Aussenden der Synchronisationsnachrichten, das Abfrage der Versendezeit beim Schatten Controller, der Einsatz der Zeit bei der Follow-Up-Nachricht durch den Controller, der die Grandmaster Clock bildet und Weitersenden, das Senden (206) von zusätzlichen Nachrichten zur Zeitsynchronisation durch ausgewählte Netzwerkgeräte, welche nicht die zuvor ermittelte Grandmaster Clock bereitstellen, wobei die in den zusätzlichen Nachrichten zur Zeitsynchronisation gesendeten Zeitinformationen sowie die für eine Ermittlung der besten Uhr mittels BMCA relevanten Uhrenparameter und die Domänennummer mit denen der zuvor ermittelten Grandmaster Clock übereinstimmen bzw. mit diesen vergleichbar sind, und wobei die zusätzlichen Nachrichten zur Zeitsynchronisation eine der Identifikation des jeweiligen ausgewählten Netzwerkgeräts entsprechende eindeutige Uhrenidentifikation enthalten.

Besonders vorteilhaft ist es, wenn die Initialisierung der Zeitsynchronisation in einem sicheren Umfeld ausgeführt wird, in dem ein Angriff mit ausreichend hoher Wahrscheinlichkeit ausgeschlossen werden kann, bspw. am Ende eines Herstellprozesses, durch den ein das abgesicherte Netzwerk enthaltendes Erzeugnis gefertigt wird. Eine einmalige Initialisierung kann vor allem dann genügen, wenn das Netzwerk bzw. dessen Konfiguration sich nach der Initialisierung nicht mehr ändert, bspw. in Fahrzeugen aller Art.

Das Verfahren umfasst ferner das Senden von zusätzlichen Nachrichten zur Zeitsynchronisation durch ausgewählte Netzwerkgeräte, die nicht die zuvor ermittelte Grandmaster Clock bereitstellen, wobei die in den zusätzlichen Nachrichten zur Zeitsynchronisation gesendeten Zeitinformationen sowie die für eine Ermittlung der besten Uhr mittels BMCA relevanten Uhrenparameter und die Domänennummer mit denen der zuvor ermittelten Grandmaster Clock übereinstimmen bzw. mit diesen vergleichbar sind. Die zusätzlichen Nachrichten zur Zeitsynchronisation enthalten jedoch eine eindeutige Uhrenidentifikation, die der Identifikation des jeweiligen ausgewählten Netzwerkgeräts entspricht. Die für dir Durchführung des BMCA relevanten Uhrenparameter umfassen insbesondere die Werte für die Variablen priority1, priority2, clockClass, clockAccuracy, offsetScaledLogVariance, und timeSource gemäß IEEE 802.1AS-Standard. Jede der von den ausgewählten Netzwerkgeräten gesendeten zusätzlichen Nachrichten zur Zeitsynchronisation scheint also für jeden, der den Netzwerkverkehr abhört, von einer Grandmaster Clock zu stammen, genauso wie die Nachrichten zur Zeitsynchronisation der bei der Initialisierung ermittelten Grandmaster Clock, so dass für den Beobachter eine Vielzahl von Grandmaster Clocks in dem Netzwerk existiert.

Die ausgewählten Netzwerkgeräte senden ihre zusätzlichen Nachrichten zur Zeitsynchronisation vorzugsweise in Zyklen, die denen der bei der Initialisierung ermittelten Grandmaster Clock entsprechen. Jedes der ausgewählten Netzwerkgeräte stellt somit eine Art Pseudo-Grandmaster Clock dar, die sich so verhält, als wäre sie die einzige und auch beste Uhr des Netzwerks. Die Pseudo-Grandmaster Clock sind für einen außenstehenden Beobachter trotz der sich hinsichtlich der Ausbreitung der Nachrichten zur Zeitsynchronisation innerhalb des Netzwerks unterscheidenden Zeitsynchronisationsbäume nicht von der bei der Initialisierung ermittelten Grandmaster Clock unterscheidbar, da die zusätzlichen Nachrichten zur Zeitsynchronisation mit derselben Domänennummer gesendet werden.

Das Senden der zusätzlichen Nachrichten zur Zeitsynchronisation durch die ausgewählten Netzwerkgeräte kann beginnen, sobald an alle Netzwerkgeräte die eindeutige Uhrenidentifikation der bei der Initialisierung ermittelten Grandmaster Clock gesendet wurde. Es ist jedoch auch möglich, das Senden der zusätzlichen Nachrichten zur Zeitsynchronisation erst zu beginnen, wenn eine erste Zeitsynchronisation aller Netzwerkgeräte des Netzwerks abgeschlossen ist.

Jede der zusätzlichen Nachrichten zur Zeitsynchronisation wird von allen Netzwerkgeräten in gleicher Weise standardkonform weitergeleitet wie die von der bei der Initialisierung ermittelten Grandmaster Clock gesendeten Nachrichten zur Zeitsynchronisation. Das heißt, nach einer Korrektur der Zeitinformation um die Laufzeit auf der Empfangsverbindungsstrecke und die interne Bearbeitungszeit wird eine Nachricht zur Zeitsynchronisation an weitere direkt verbundene Netzwerkgeräte gesendet.

Die Netzwerkgeräte sind miteinander über physikalische Schnittstellen verbunden. Nachrichten zur Zeitsynchronisation werden über für die Schnittstelle definierten logischen Port gesendet, so dass auch bei gemeinsam genutzten physikalischen Übertragungsmedien zwischen zwei Netzwerkgeräten Punkt-zu-Punkt-Verbindungen für die Zeitsynchronisation bestehen. In der vorliegenden Beschreibung wird der Begriff Schnittstelle gleichbedeutend mit dem Begriff Port verwendet, wenn sich aus dem Kontext nichts anderes ergibt.

Eine Identifizierung der bei der Initialisierung ermittelten Grandmaster Clock ist für einen Beobachter, welcher erst nach Abschluss der Initialisierung beginnt, den Netzwerkverkehr abzuhören, durch das Verfahren erheblich erschwert oder sogar unmöglich.

Die Auswahl der Netzwerkgeräte, welche neben der Grandmaster Clock eigene Nachrichten zur Zeitsynchronisation senden und sich dadurch als Grandmaster Clock ausgeben kann eine Prüfung umfassen, ob ein Netzwerkgerät für den Betrieb des Netzwerks oder eines das Netzwerk enthaltenden Systems unverzichtbar ist, und daher nicht als Köder für einen möglichen Angriff dienen sollte. Unverzichtbare Netzwerkgeräte sind bspw. solche, die mehrere Netzwerksegmente miteinander verbinden, wie z.B. ein Switch, eine Bridge, oder auf denen Funktionen implementiert sind, welche nicht von anderen Netzwerkgeräten übernommen werden können, wie z.B. ein Domänenrechner für das automatisierte oder autonome Fahren oder andere sicherheitsrelevante Funktionen. Solche Netzwerkgeräte werden vorzugsweise nicht ausgewählt. Bei der Auswahl kann auch geprüft werden, ob ein Netzwerkgerät zur Ausführung generischer Funktionen oder Software eingerichtet ist, welche auch von einem anderen Netzwerkgerät innerhalb des Netzwerks ausführbar sind und entsprechend bei Bedarf auf eines dieser anderen Netzwerkgeräte verlagert werden können, bspw. bei einem erkannten Angriff auf ein Netzwerkgerät. Solche Netzwerkgeräte können bevorzugt für das Senden eigener Nachrichten zur Zeitsynchronisation ausgewählt werden, genauso wie Netzwerkgeräte, welche sich am Rand des Netzwerks befinden und/oder nicht sicherheitsrelevante Funktionen bereitstellen und deren Isolierung vom Rest des Netzwerks im Falle eines erkannten Angriffs nicht zu größeren Funktionsstörungen führen würde. Gleiches gilt für Netzwerkgeräte, an welche nur wenige weitere Netzwerkgeräte angeschlossen sind, bspw. Netzwerkgeräte mit nur einem Port und entsprechend nur einem Nachbarn, und die dadurch leichter isoliert werden können. Die Auswahl von Netzwerkgeräten für das Senden eigener Nachrichten zur Zeitsynchronisation kann auch bevorzugt Netzwerkgeräte treffen, die mit besonders starken Sicherheitsmechanismen versehen sind und daher Angriffen besser widerstehen können. In einem einfachen Fall kann die Auswahl von Netzwerkgeräten für das Senden eigener Nachrichten zur Zeitsynchronisation das Auslesen eines Flags umfassen, das bei der Produktion oder Konfiguration des Netzwerkgeräts für den Betrieb in dem Netzwerk gesetzt wurde. Andere Merkmale zur Feststellung, ob ein Netzwerkgerät zum Senden zusätzlicher Nachrichten zur Zeitsynchronisation konfiguriert werden kann, können durch entsprechende Funktionsabfragen ermittelt werden.

Das Verfahren umfasst außerdem in Netzwerkgeräten, die nicht die bei der Initialisierung ermittelte Grandmaster Clock bereitstellen, das Empfangen von Nachrichten zur Zeitsynchronisation an einer ersten Netzwerk-Schnittstelle und eine Prüfung, ob die in der Nachricht zur Zeitsynchronisation übertragene Uhrenidentifikation mit der gespeicherten Uhrenidentifikation der bei der Initialisierung ermittelten Grandmaster Clock übereinstimmt. Falls die Uhrenidentifikationen übereinstimmen wird eine lokale Uhr unter Verwendung der in der Nachricht zur Zeitsynchronisation empfangenen Zeitinformation synchronisiert.

Eine Weiterentwicklung des Verfahrens umfasst das Überwachen der in zusätzlichen Nachrichten zur Zeitsynchronisation übertragenen Zeitinformationen auf eine Abweichung gegenüber in Nachrichten zur Zeitsynchronisation mit der Uhrenidentifikation der bei der Initialisierung ermittelten Grandmaster Clock übertragenen Zeitinformationen. Solange ein Netzwerkgerät mit der bei der Initialisierung ermittelten Grandmaster Clock synchronisiert ist kann die dem Vergleich zugrunde liegende Zeitinformation auch von der Uhr des Netzwerkgeräts bereitgestellt sein. Wenn eine Abweichung der Zeitinformation festgestellt wurde, können zusätzliche Nachrichten zur Zeitsynchronisation mit der zugehörigen Uhrenidentifikation blockiert werden, d.h., nicht in das Netzwerk weitergeleitet werden, für die eine Abweichung festgestellt wurde. Sollte die Abweichung die Folge eines Angriffs auf das Netzwerkgerät sein wird ein Angreifer, der das Netzwerk nur an einer Stelle überwacht von der Blockierung nichts bemerken, weil Nachrichten zur Zeitsynchronisation nicht von einem Empfänger bestätigt werden. Alternativ kann die in der empfangenen zusätzlichen Nachricht zur Zeitsynchronisation übertragene abweichende Zeitinformation basierend auf von der bei der Initialisierung ermittelten Grandmaster Clock empfangenen Zeitinformationen korrigiert und weitergeleitet werden. Die Basis für die Zeitkorrektur kann auch die mit der bei der Initialisierung ermittelten Grandmaster Clock synchronisierte lokale Uhr sein. Alternativ oder zusätzlich kann eine entsprechende Nachricht an ein zuvor festgelegtes Netzwerkgerät des Netzwerks gesendet werden, welches dazu eingerichtet ist, geeignete Schutzmaßnahmen einzuleiten und/oder zu steuern. Geeignete Schutzmaßnahmen können bspw. eine Isolierung desjenigen Netzwerkgeräts oder einzelner Streams bzw. Nachrichten desjenigen Netzwerkgeräts vom Rest des Netzwerks umfassen, welches die abweichenden Zeitinformationen sendet, oder einen Neustart des betreffenden Netzwerkgeräts.

Eine Ausgestaltung des Verfahrens umfasst das sporadische oder zyklische Senden von Nachrichten zur Zeitsynchronisation durch die bei der Initialisierung ermittelte Grandmaster Clock, in denen die Zeitinformation von der tatsächlichen Zeit abweicht, und das Überwachen der von den anderen Netzwerkgeräten gesendeten zusätzlichen Nachrichten zur Zeitsynchronisation darauf, ob diese die abweichenden Zeitinformationen entsprechend widerspiegeln. Falls das nicht der Fall ist - unvermeidbare Toleranzen bei der Synchronisierung können dabei unbeachtet bleiben - liegt möglicherweise eine Fehlfunktion oder ein Angriff vor, und das Netzwerkgerät, das die bei der Initialisierung ermittelte Grandmaster Clock bereitstellt kann eine entsprechende Nachricht an ein zuvor festgelegtes Netzwerkgerät des Netzwerks senden, welches dazu eingerichtet ist, geeignete Schutzmaßnahmen einzuleiten und/oder zu steuern, bspw. das Netzwerkgerät, welches die Änderungen der abweichenden Zeitinformationen nicht widerspiegelt vom Rest des Netzwerks isoliert. Falls die von den anderen Netzwerkgeräten gesendeten zusätzlichen Nachrichten zur Zeitsynchronisation die geänderte Zeitinformation widerspiegeln kann davon ausgegangen werden, dass sich alle Pseudo-Grandmaster Clocks regelkonform verhalten.

Ein erfindungsgemäßes Computerprogrammprodukt enthält Befehle, die bei der Ausführung durch einen Computer diesen dazu veranlassen, eine oder mehrere Ausgestaltungen und Weiterentwicklungen des vorstehend beschriebenen Verfahrens ausführen.

Die Anmeldung schlägt einen neuartigen intelligenten Mechanismus vor um die Temperaturveränderung resp. die Hitzeentwicklung der Steuergeräte zu monitoren. Dabei verwendet das Verfahren das Ethernet basierte Zeitsynchronisationsprotokoll, um Veränderungen der ECU Temperatur zu erkennen.

Die Ethernet basierte Zeitsynchronisation (wird im Einsatz sein bei allen hochperformaten ECUs) wird durch das IEEE802.1AS Protokoll realisiert. Dabei gibt in jeder ECU immer ein Quarz den Takt an eine PLL, welche dann per Software auf die beste Uhr des Netzwerkes angeglichen wird. Quarze werden durch die Umgebungstemperatur beeinflusst, als sehr viel stärker als das Alter der Quarze.

Die physikalischen Eigenschaften eines Quarzes und seiner Güte sind ausschlaggebend für die Genauigkeit der Zeitsynchronisation (z. B. PTP), dessen Basis die Schwingungen des Quarzes darstellt. Den höchsten Einfluss auf den Quarz und dessen Genauigkeit hat die Temperatur. Die geringsten Abweichungen von seiner Spezifikation hat ein typischer Quarz bei mittlerer Raumtemperatur von +25 °C. Die Anzahl der Schwingungen wird geringer, wenn die Außentemperatur abnimmt und er schwingt schneller bei Zunahme der Außentemperatur, welche den Quarz aufheizt. Abbildung 5 zeigt den Einfluss der Temperatur auf AT-Cut Quarze.

Die Spezifikation von IEEE 802.1AS empfiehlt einen Quarz mit einer Güte nicht schlechter als $\pm 100$ ppm. AT-Schnitt-Quarze zeichnen sich dadurch aus, dass deren Schwingung über die Temperaturveränderung einer kubischen Kurve entspricht. Dadurch kann der Quarz auch über größere Temperaturbereiche stabil arbeiten, im Vergleich zu anderen Quarztypen.

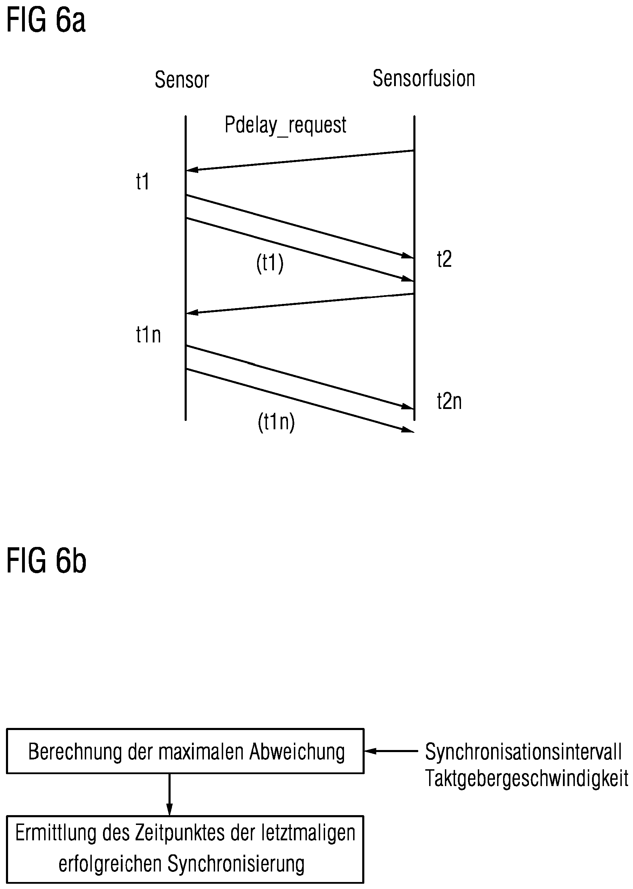

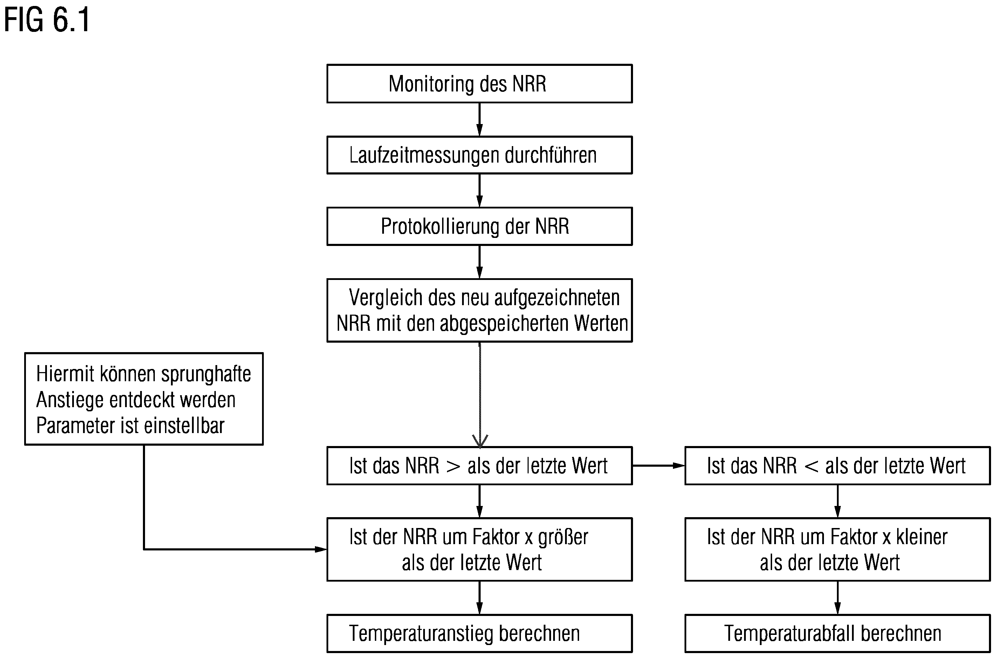

Die generelle Idee und Lösung der Erfindung ist kurz in Abbildung 6 dargestellt. Durch Laufzeitmessungen mit der zu untersuchenden Komponente wird die Taktrate dessen Ethernet-Quarzes ermittelt und fortlaufend beobachtet (das erfordert keinen weiteren Nachrichtenaustausch oder Protokolle) und auf Basis der Veränderung der Taktrate kann die Umgebungstemperatur in dieser ECU bestimmt werden, da diese direkten Einfluss auf den Quarz hat.

Der Controller, der die Zeitmasterfunktionalität implementiert hat, muss bestimmte Interrupts bedienen und auch dafür Ressourcen freihalten. Durch die Anmeldung könne aber nahezu jeder Controller verwendet werden, was wiederum die Systemkosten bzw. Ressourcen senkt.

Den durch das Verfahren bereitgestellten Effekt, nämlich den Schutz gegen unbefugtes Angreifen der Zeitsynchronisation, Verfälschen der Kommunikation und gegen den Austausch von Geräten, kann man auch auf andere Weise und mit noch höherem Sicherheitsniveau erzielen, beispielsweise durch den Einsatz von Hardware-Verschlüsselung (bzw. Authentifizierung) bedienen. Das Verfahren ermöglicht es Schutzmechanismen günstiger anzubieten (hilfreich um Anforderungen nach ISO26262 zu bedienen) und senkt zudem die Systemkosten. Das Verfahren könnte sogar per OTA nachträglich eingespielt werden.

Im Fahrzeug ist es hingegen in der Regel nicht wirtschaftlich, allen, mit dem Netzwerk verbundenen Teilnehmern, für eine lückenlos verschlüsselte Kommunikation ausreichende Hardwareausstattung zu spendieren. Das beschriebene Verfahren setzt deutlich geringere Hardwareressourcen (kann mit vorhandenen Implementierungen umgesetzt werden) voraus und steigert somit das Sicherheitsniveau deutlich, ohne dass dies zwangsläufig mit höheren Herstellungskosten für das Netzwerk oder daran angeschlossene Geräte gekoppelt wäre.

Dieses Verfahren kann insbesondere in Form einer Software implementiert sein, die als Update oder Upgrade zu bestehender Software oder Firmware von Teilnehmern am Netzwerk vertrieben werden kann und insofern ein eigenständiges Produkt darstellt.

In vorteilhafter Weise kann durch die Erfindung die Güte der Ausführung von Software-basierten Anwendungen (z. B. Automatisiertes Fahren) erhöht werden, insbesondere ohne finanziellen Mehraufwand. Mit der Nutzung des neu eingeführten Ethernet-Protokolls im Automobil sind Mechanismen notwendig, die sich einfache Techniken und gegebene Eigenschaften von Technologien zu Nutze machen, um auf teure Implementierungen und weitere zusätzliche Hardware verzichten zu können. Das erfindungsgemäße Netzwerksystem ist im Hinblick auf Kosten und Zuverlässigkeit verbessert. Continental kann hiermit durch Softwarebasierte Verfahren das beste aus seiner ECU oder dem Netzwerk herausholen und dem Kunden mehr Funktionalität bieten.

In vorteilhafter Weise kann durch die Erfindung die Sicherheit eines Fahrzeugnetzwerks signifikant und sehr simpel erhöht werden, insbesondere ohne finanziellen Mehraufwand. Mit der Nutzung des neu eingeführten Ethernet-Protokolls im Automobil sind Mechanismen notwendig, die sich einfache Techniken und gegebene Eigenschaften von Technologien zu Nutze machen, um auf teure Implementierungen und weitere zusätzliche Hardware verzichten zu können. Durch frühzeitigere Erkennung von Angriffen und Fehlverhalten mittels der frühen Analyse der Kommunikationspfade lassen sich Lücken und Fehler vor der Auslieferung des Fahrzeugs erkennen. Das erfindungsgemäße Netzwerksystem ist im Hinblick auf Kosten und Zuverlässigkeit verbessert. Die Testbarkeit des Systems wird durch die Erfindung klarer definiert und dadurch können Testkosten gespart werden. Zudem bietet die Erfindung eine transparente Sicherheitsfunktionalität.

Heute werden Anwendungen implementiert, zugeschnitten und angepasst auf einen Fahrzeugtyp. Mit diesem vorgestellten Verfahren lässt sich die Software flexibler gestalten und Mehrwertdienste aus dem darunter liegenden System generieren, ohne es vorher fix in die Software programmiert zu haben. Wir müssen heute eigentlich vom Worst-Case ausgehen was Ressourcen (Geld) kostet und Qualität einbüßt. Die Erfindung erlaubt es, den Softwareentwicklern und -architekten eine Software/Anwendung anzubieten, welche flexibler und präziser auf die Anforderungen des Anwendungsfalles zugeschnitten werden kann. Durch den Einbau der genannten Verfahren in Software kann innerhalb des Steuergerätes eine Optimierung erfolgen. Dies bedeutet, dass die Software Plattform- und Fahrzeugtyp unabhängiger gestaltet werden kann.

Die neuen Technologien sind im Automobil nicht mehr aufzuhalten. Protokolle wie IP, AVB und TSN haben mehrere Tausend Seiten an Spezifikationen und Testsuites. Die Beherrschbarkeit dieser neuen Protokolle im Automobil ist nicht direkt gegeben.

Das neue Verfahren kann in ein bestehendes Netzwerk integriert werden ohne dass vorhandene Geräte zu Schaden kommen. Der Standard wird nicht verletzt, da das vorhandene Protokoll genutzt werden kann.

Der Einsatz des Verfahrens wäre auch möglich für andere Kommunikationssysteme mit Uhrensynchronisationskomponenten und embedded-Systemen.

Das Computerprogrammprodukt kann auf einem computerlesbaren Medium oder Datenträger gespeichert sein. Der Datenträger kann physisch verkörpert sein, bspw. als Festplatte, CD, DVD, Flash-Speicher oder dergleichen, der Datenträger bzw. das Medium kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

Ein zumindest erfindungsgemäßes Netzwerkgerät umfasst neben einem Mikroprozessor und nichtflüchtigem und flüchtigem Speicher sowie einem Zeitgeber mindestens eine physikalische Kommunikationsschnittstelle. Die Komponenten des Netzwerkgeräts sind mittels einer oder mehreren Datenleitungen oder -bussen kommunikativ miteinander verbunden. Der Speicher des Netzwerkgeräts enthält Computerprogramminstruktionen, die bei Ausführung durch den Mikroprozessor das Netzwerkgerät dazu einrichten, eine oder mehrere Ausgestaltungen des vorstehend beschriebenen Verfahrens zu implementieren.

Die vorliegende Erfindung schützt den Grandmaster dadurch, dass dessen bislang einfach auffindbare Spur durch eine Vielzahl von falschen Spuren verschleiert bzw. verborgen wird und damit die Position des Grandmasters innerhalb des Netzwerks für Angreifer schwerer zu ermitteln ist. Dann kann der Angreifer gar nicht mehr angreifen oder er benötigt zumindest erheblich mehr Zeit. Angriffe die nicht zufällig sofort den Grandmaster betreffen können erkannt werden, und es können geeignete Abwehrmaßnahmen ergriffen werden, während das System weiterhin mit der geforderten Genauigkeit synchronisiert bleibt.

Das erfindungsgemäße Verfahren kann mit existierenden Netzwerkgeräten umgesetzt werden, wobei ggf. nur Anpassungen in der Software bzw. der für den Empfang und die Verarbeitung von Nachrichten zur Zeitsynchronisation genutzten Zustandsmaschinen erforderlich sind, um nur die von der bei der Initialisierung ermittelten Grandmaster Clock kommenden Nachrichten zur Zeitsynchronisation für die Synchronisierung der Uhren zu nutzen, die zusätzlichen Nachrichten zur Zeitsynchronisation aber trotzdem weiterzuleiten und nicht einfach zu löschen. Dadurch fallen, wenn überhaupt, für die Umsetzung nur geringe zusätzliche Kosten an. Auch bestehende Systeme können durch entsprechend geänderte Software dazu eingerichtet werden, das Verfahren umzusetzen. Ein weiterer Vorteil des erfindungsgemäßen Verfahrens liegt darin, dass die jeweils zugrundeliegende Hardwareplattform ohne Bedeutung ist, solange diese eine Synchronisierung nach dem IEEE 802.1AS-Standard unterstützen.

KURZE BESCHREIBUNG DER ZEICHNUNG

Im Folgenden wird die Erfindung mit Bezug auf die Zeichnung exemplarisch erläutert. In der Zeichnung zeigt:

Fig. 1a eine schematische Draufsicht auf ein Kraftfahrzeug mit einem Ausführungsbeispiel eines erfindungsgemäßen Ethernet-Bordnetzes;

Fig. 1b eine schematische Darstellung des Ethernet-Bordnetzes mit einer ersten Steuereinheit, einer zweiten Steuereinheit und einer dritten Steuereinheit, welche mit einem ersten Verbindungsweg, einem zweiten Verbindungsweg und einem dritten Verbindungsweg verbunden sind;

Fig. 2 einen vollständigen Ablauf des Verfahrens und die Bestimmung der aktuellen Uhrzeit des zu untersuchenden Knotens und dessen Taktgebereigenschaften;

Fig. 3 ein Ablaufdiagramm zur Verschlüsselung der Zeitsynchronisationsnachrichten zur Bestimmung einer Art eines Übertragungs-mediums des jeweiligen Verbindungswegs;

Fig. 4 eine Darstellung eines Sägezahnmodells eines Frequenzdrifts bei erfolgreicher Zeitsynchronisation;

Fig. 5 eine graphische Darstellung der Berechnung des Zeitraums der Asynchronität;

Fig. 6a ein Ablauf der Bestimmung eines Offsets eines Sensors bei einer Sensorfusion;

Fig. 6b die Ermittlung des Zeitpunktes der letzten erfolgreichen Synchronisation;

Fig. 7 ein Ablaufdiagramm zur Bestimmung der individuellen Quarzfrequenz;

Fig. 8 ein Ablaufdiagramm zur Berechnung des Schlüssels und zur Versendung der Nachrichten;

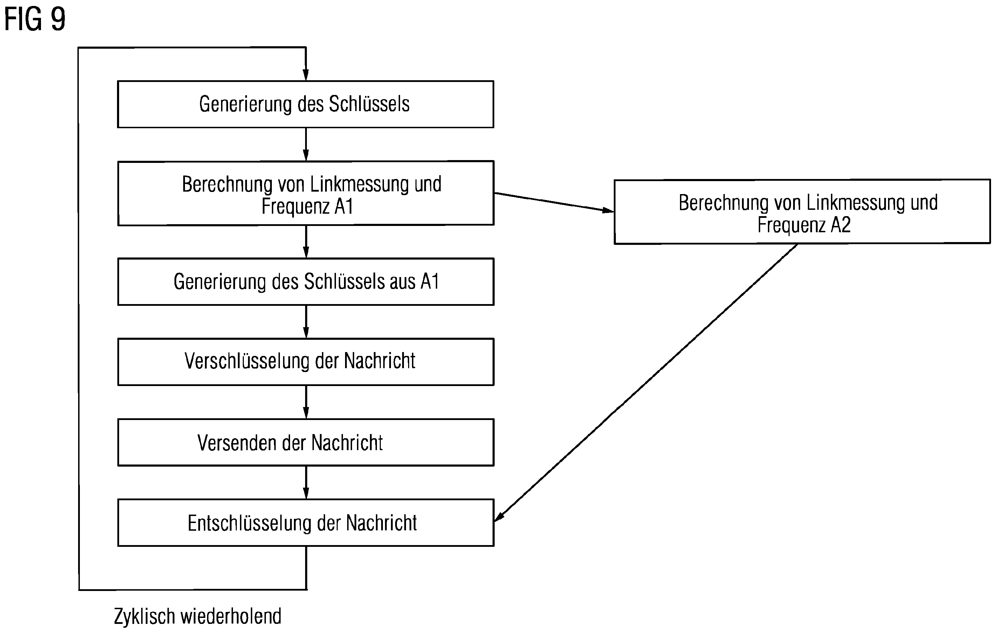

Fig. 9 ein Ablaufdiagramm zur zeitlichen Verwendung eines Schlüssels;

Fig. 10 ein Ablaufdiagramm zur Anpassung eines Programms im Ethernet-Bordnetz;

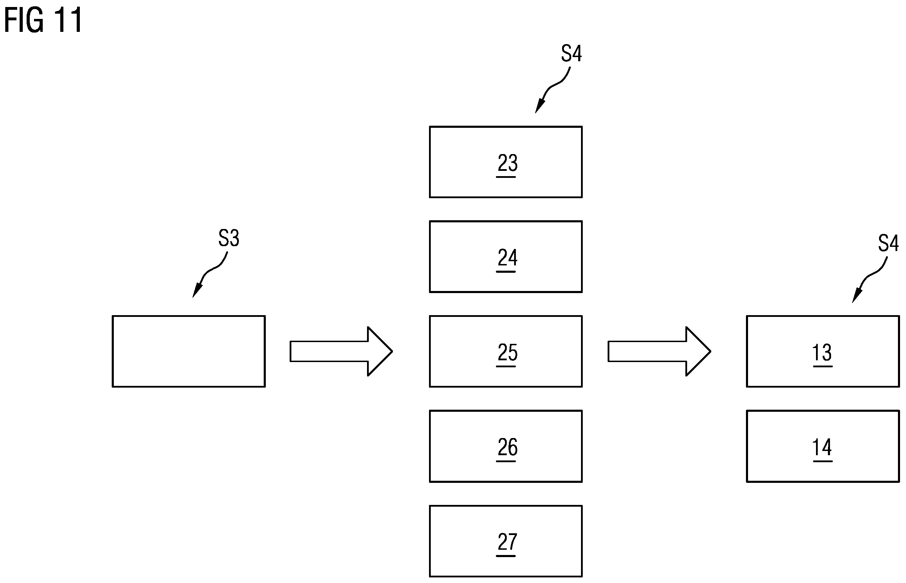

Fig. 11 ein Ablaufdiagramm zur Anpassung eines Programms im Ethernet-Bordnetz;

Fig. 12 ein Ablaufdiagramm zur Bestimmung und Speicherung einer Laufzeit eines Signals;

Fig. 13 ein Ablaufdiagramm zur beispielhaften Anpassung eines Programms im Ethernet-Bordnetz;

Fig. 14 ein Ablaufdiagramm zur beispielhaften Anpassung eines Programms im Ethernet-Bordnetz;

Fig. 15 Ablaufdiagramm zur Bewertung der Verwendung von empfangenen Daten auf Basis des letzten erfolgreichen Synchronisationszeitpunktes;

Fig. 16 Aufbau einer Steuereinheit;

Fig. 17 Verschlüsselte Links mit erzeugtem dynamischen Schlüssel aus der Kommunikation der Steuereinheiten;

Fig. 18 eine Darstellung des Anwendungsfalles einer Datenfusion;

Fig. 19 eine Darstellung des Anwendungsfalles einer Datenfusion mit einem Datenrekorder;

Fig. 20 eine Darstellung einer Zuordnung von richtigen Daten bei einer Datenfusion;

Fig. 21 eine Darstellung einer fehlerhaften Zuordnung von Daten bei einer Datenfusion;

Fig. 22 ein Ablauf zur rückwirkenden Löschung von Daten, wenn der Synchronisationszeitpunkt oberhalb des Grenzwertes liegt;

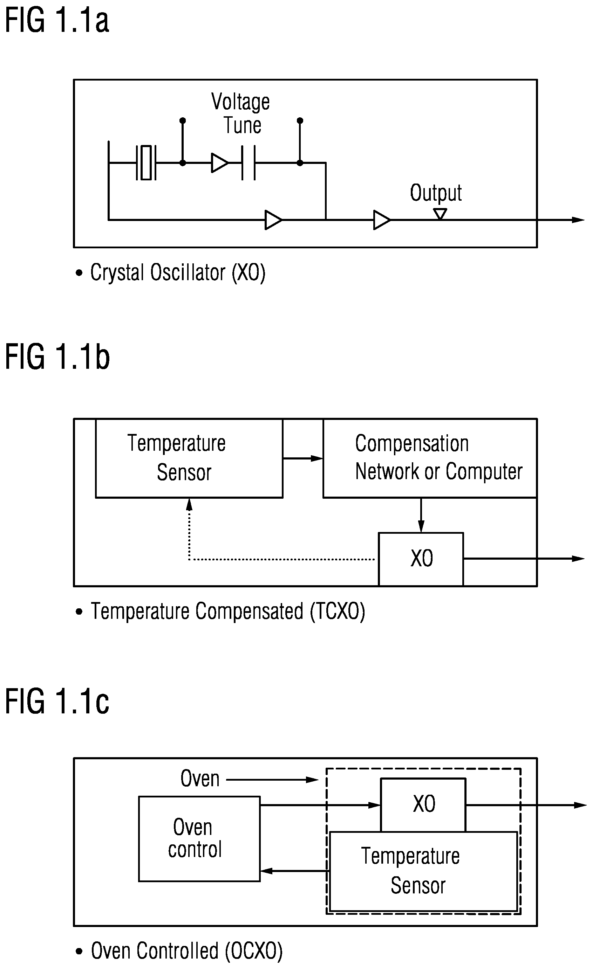

Fig. 1.1 zeigen Aufbauten von bekannten Oszillatoren;

Fig. 2.1 zeigt die Frequenz-Temperatur Charakteristik verschiedener QuarzTypen;

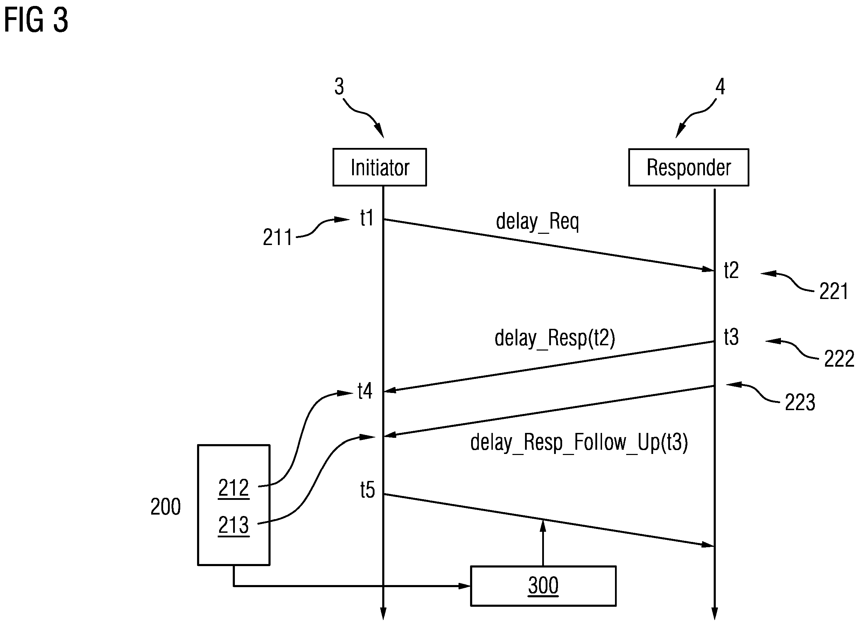

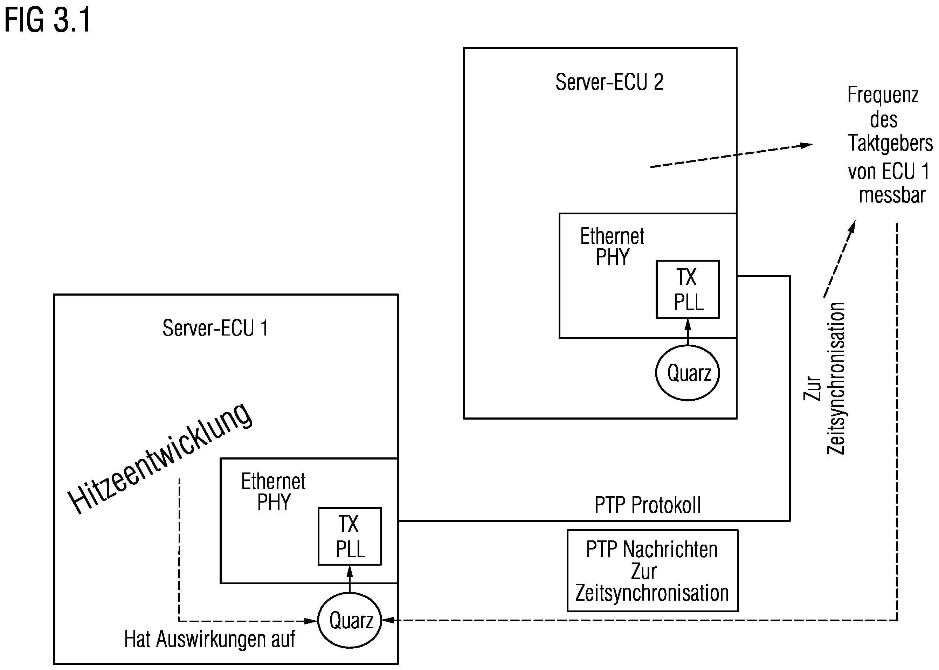

Fig. 3.1 generellen Ablauf des erfindungsgemäßen Verfahrens;

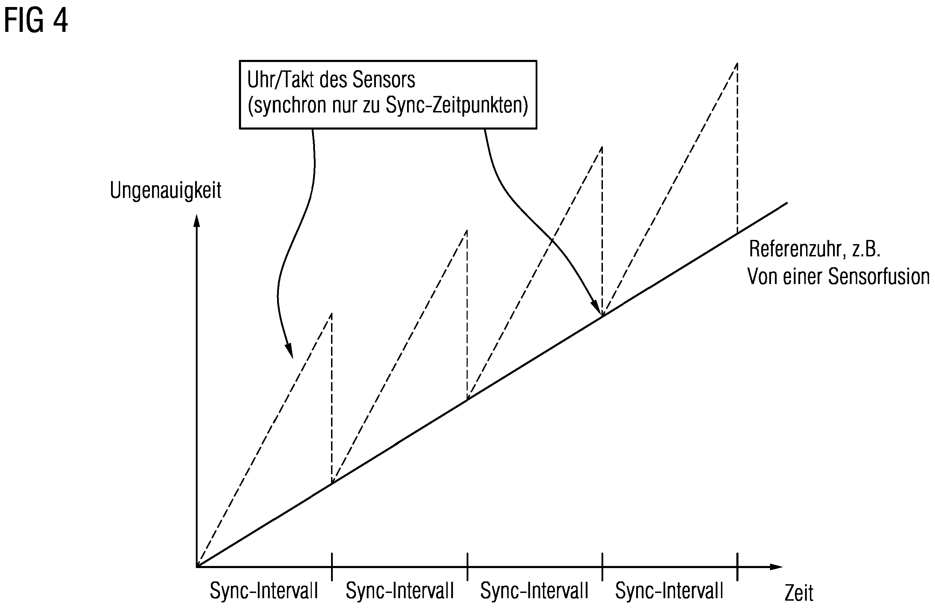

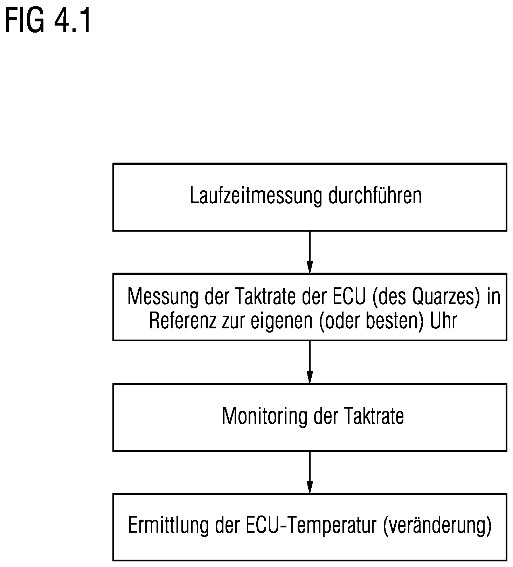

Fig. 4.1 ein Systemmodell der Zeitsynchronisation von Ethernet-Temperatureinflüssen;

Fig. 5.1a die Ermittlung des erstmaligen NRR (Frequenzoffset zur eigenen Uhr);

Fig. 5.1b die Funktionsweise der Laufzeitmessung;

Fig. 6.1 Ermittlung der Temperaturveränderung durch Veränderung der Taktrate (resp. dem Eintreffen von Zeitsynchronisationsnachrichten);

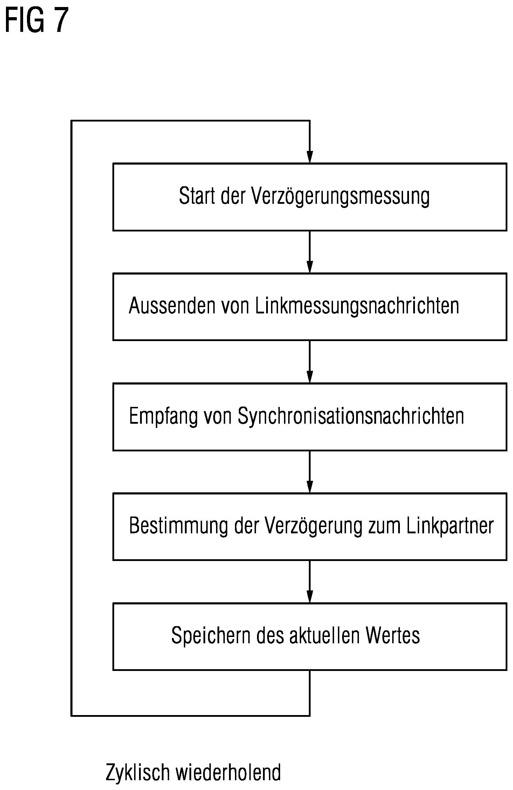

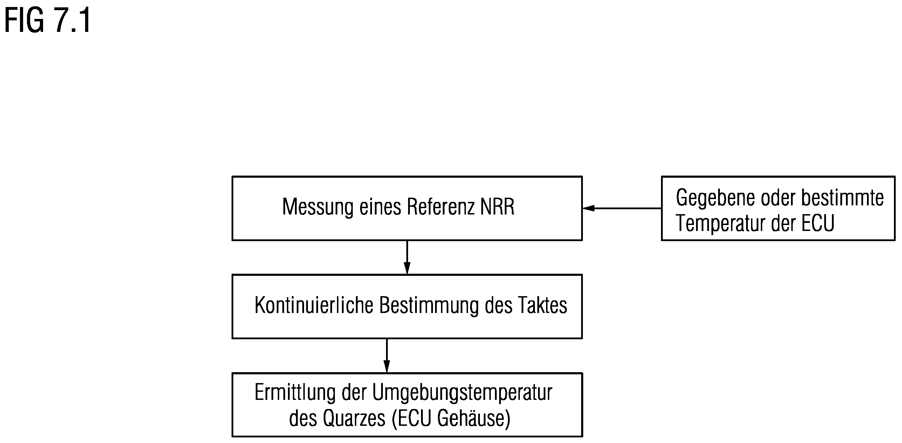

Fig. 7.1 die Ermittlung der Temperatur resp. des Temperaturanstieges in der ECU;

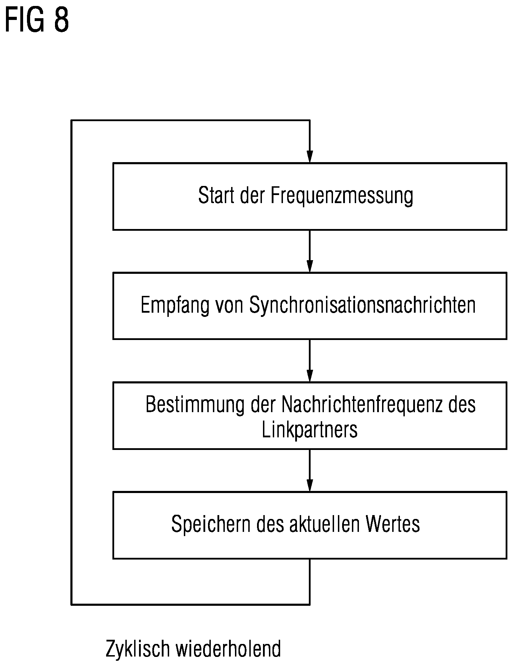

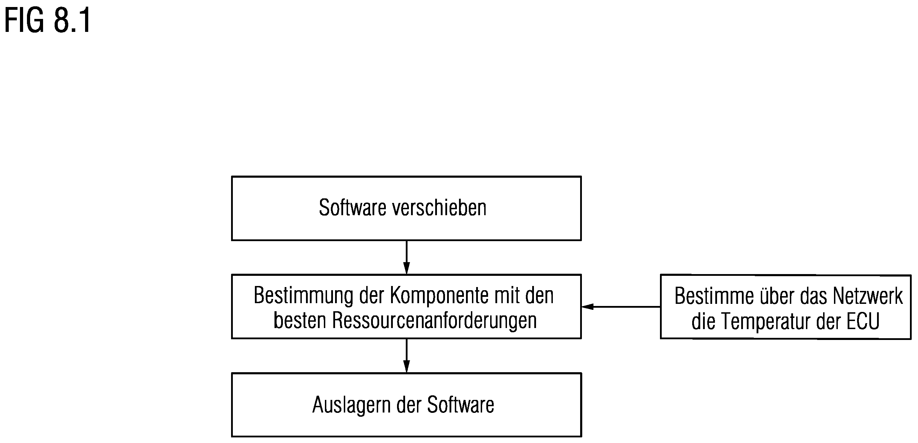

Fig. 8.1 die Verwendung des Verfahrens bei der Entscheidung zur Verlagerung von Software/Ressourcen.

Gleiche oder ähnliche Elemente können in den Figuren mit denselben Bezugszeichen referenziert sein.

BESCHREIBUNG VON AUSFÜHRUNGSBEISPIELEN

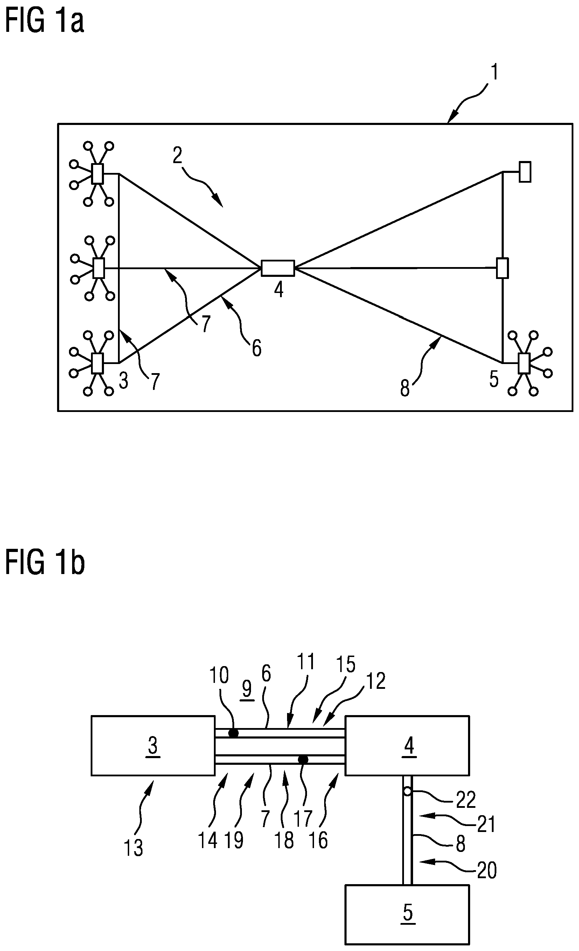

Fig. 1a zeigt ein Kraftfahrzeug 1 in Draufsicht. Das Kraftfahrzeug 1 weist ein Ethernet-Bordnetz 2 auf. Das Ethernet-Bordnetz 2 wiederum weist gemäß dem Ausführungsbeispiel eine Mehrzahl von Steuereinheiten 3, 4, 5, welche auch als Steuereinrichtungen oder Steuergeräte bezeichnet werden können. Die Steuereinheiten sind dabei mit Verbindungswegen untereinander verbunden. Aufgrund der vorhandenen Topologie des Ethernet-Bordnetzes 2 im Ausführungsbeispiel gibt es mehrere parallele Kommunikationswege zwischen den Steuereinheiten. Die Verbindungswege können beispielsweise aus unterschiedlichen Medientypen bzw. Materialien ausgebildet sein.

Mit Zunahme der Anzahl an Ethernet-Varianten wird beispielsweise auch die dynamische Änderung der Verbindungsgeschwindigkeit Einsatz finden. Das bedeutet beispielsweise, dass zur Laufzeit die Geschwindigkeit geändert werden kann. Beispielsweise kann ein 10 Gbit/s Verbindungsweg auf 100 Mbit/s geändert werden, damit Energie gespart wird. Da es sich dabei um eine dynamische Funktion handelt, kann es sein, dass das Bordnetz nach Auslieferung oder nach Erstmontage im Kraftfahrzeug anders ausgebildet ist als etwa nach einer Softwareaktualisierung oder in einer Fehlsituation.

Das Ethernet-Bordnetz 2 weist eine mindestens eine erste Steuereinheit 3, eine zweite Steuereinheit 4 und zusätzlich eine dritte Steuereinheit 5 auf. Die erste Steuereinheit 3 ist durch einen ersten Verbindungsweg 6 mit der zweiten Steuereinheit 4 verbunden. Weiterhin ist die erste Steuereinheit 3 gemäß dem Ausführungsbeispiel auch durch einen zweiten Verbindungsweg 7 mit der zweiten Steuereinheit 4 verbunden.

Die erste Steuereinheit 3, die zweite Steuereinheit 4 und/oder die dritte Steuereinheit 5 können beispielsweise als Steuergerät oder Netzwerkweiche ausgebildet sein. Die zweite Steuereinheit 4 und die dritte Steuereinheit 5 sind durch einen dritten Verbindungsweg 8 miteinander verbunden.

Gemäß dem Ausführungsbeispiel von Fig. 1a sind die erste Steuereinheit 3 und die zweite Steuereinheit 4 direkt über den ersten Verbindungsweg 6 miteinander verbunden, während die erste Steuereinheit 3 und die zweite Steuereinheit 4 mit dem zweiten Verbindungsweg 7 nur indirekt verbunden sind, da der zweite Verbindungsweg 7 durch eine weitere Steuereinheit in zwei Teile geteilt ist. Gemäß einem anderen Ausführungsbeispiel kann der zweite Verbindungsweg 7 die erste Steuereinheit 3 und die zweite Steuereinheit 4 aber auch direkt miteinander verbinden.

Generell gesprochen eignet sich das Verfahren, Fehler in der Synchronisierung zu entdecken.

Wie in Fig. 2 dargestellt, wird es ermöglicht, die Zeitdauer der Unsynchronität respektive wann der Zeitpunkt und wann das letzte Mal korrekt synchronisiert wurde, zu berechnen bzw. festzustellen. Auf Basis einer bestehenden Synchronisierung schlägt das Verfahren vor, die Ungenauigkeit der Uhren im Netzwerk z. B. des "meiner" Nachbar-ECU oder der "Nachbar" CPU, innerhalb derselben ECU liegen kann, zu ermitteln. Auf Basis dieser ermittelten Daten kann mittels eines Zeitstempels dieser Komponente, in Verbindung mit "meiner" eigenen Uhr oder der des Grandmasters und des Synchronisierungsintervalles berechnet werden, wieviel Zeit seit der letzten Synchronisierung vergangen ist. Es kann damit ermittelt werden, wann die letzte erfolgreiche Synchronisierung stattgefunden hat. Zu einem Zeitpunkt, der auch Ermittlungszeitpunkt genannt wird, wird ein Zeitstempel einer ECU eines Steuergerätes aufgenommen, von dem man wissen möchte, ob dieser noch synchron ist. Auf Basis einer Reihe von Parametern wird dann ermittelt, wieviel Synchronisationsintervalle respektive seit welchem Zeitpunkt diese Komponente nicht mehr erfolgreich synchronisiert wurde, wie dies exemplarisch in Fig. 4 visualisiert wird.

Somit bestimmt das Verfahren, wann die letzte erfolgreiche Synchronisation eines Knotens stattgefunden hat und damit auch wie lange der Knoten nicht mehr synchronisiert wurde. Dies ist die Basis, um zu entscheiden, ob die Sensordaten vertrauenswürdig sind und damit benutzbar sind oder nicht.

Fig. 4 veranschaulicht generell die Synchronisation einer Nachrichten-basierten Zeitsynchronisation. Nach dem Eintreffen von Synchronisationsnachrichten wird die interne Uhr oder der Offset angepasst. Danach läuft die Uhr wieder mit der eigenen Charakteristik bis zur nächsten Synchronisation weiter.

Wie aus Fig. 2 zu entnehmen beginnt das Verfahren indem der Knoten, respektive ein μC oder Switch oder die gesamte ECU oder die Steuereinheit 3, 4, 5 zu dessen Zeit befragt wird oder mittels eines Zeitstempels ausgelesen wird. Dieser Wert wird gespeichert. Das Verfahren bestimmt dann, mittels des 802.1AS Protokolls (Pdelay-Abfrage) den Frequenzdrift des Zeitgebers. Damit wird durch zyklische Nachrichten, welche eigentlich der Laufzeitmessung dienen und sowieso übertragen werden, berechnet mit welcher Geschwindigkeit der Taktgeber dieser ECU/μC oder gesamte ECU oder eine Steuereinheit 3, 4, 5 arbeitet.

Zur Laufzeitmessung wird der Ablauf nach dem Ablauf aus Fig. 3 verwendet. Ein Port, der Initiator, startet die Messung, indem er eine Delay_Request-Nachricht an den mit ihm verbundenen Port, den Responder sendet und einen Ausgangszeitstempel t1 generiert. Dieser Ausgangszeitstempel bezeichnet einen Hardware-Zeitstempel, der so spät wie möglich beim Verlassen des Ethernet-Transceivers geschrieben wird. Der Responder generiert beim Eintreffen dieses Paketes einen Zeitstempel t2. Als Antwort sendet der Responder eine Delay_Response-Nachricht. In dieser Nachricht überträgt er den Empfangs-Zeitstempel t2 der Delay_Request-Nachricht. Verlässt diese Nachricht den Responder, so erzeugt dieser wiederum einen Zeitstempel t3, welcher in einer unmittelbar darauffolgen-den Delay_Response_Follow-Up-Nachricht versendet wird. Beim Empfang der Delay_Response-Nachricht beim Initiator generiert dieser einen Zeitstempel t4. Der Initiator kann aus den vier Zeitstempeln t1 bis t4 die durchschnittliche Laufzeit der zurückgelegten Strecken errechnen.

PTP definiert eine Master-/Slave-Uhrenhierarchie mit einer besten Uhr innerhalb eines Netzwerkes. Von dieser Uhr, dem Grandmaster, leitet sich die Zeitbasis der in diesem Netzwerk befindlichen Knoten ab. Der Best Master Clock Algorithmus (BMCA) dient zur Bestimmung dieses Uhrentyps und der Bekanntmachung dieser Information im Netzwerk. IEEE 802.1AS-fähige Systeme senden zyklisch Announce-Nachrichten zu ihren Nachbarknoten mit Informationen zur besten Uhr der Wolke. Der Empfänger einer solchen Nachricht vergleicht diese Informationen mit den Merkmalen seiner Uhr und den evtl. bereits von einem anderen Port empfangenen Nachrichten. Auf Basis dieser Nachrichten wird ein Zeitsynchronisationsspannbaum aufgestellt. Jedem Port wird in diesem Zuge einer von vier Port-Zuständen zugewiesen. Den Zustand Master Port bekommt der Port, der einen kürzeren Weg zum Grandmaster hat als sein Linkpartner. Der Zustand Slave wird dann zugeordnet, wenn an diesem Knoten noch kein anderer Port diesen Zustand besitzt. Disabled wählt derjenige Port, welcher dass PTP-Protokoll nicht vollständig unterstützen kann. Der Zustand passiv wird gewählt, wenn keiner der anderen drei Zustände zutrifft.

Der Austausch der Zeitinformation wird schließlich durch den Sync_Follow_Up-Mechanismus durchgeführt. Die Master Ports senden zyklisch Sync- und Follow_Up-Nachrichten an den benachbarten Linkpartner. Wenn die Sync-Nachricht den Master Port verlässt, wird ein Zeitstempel generiert, welcher unmittelbar in einer darauffolgenden Follow_Up-Nachricht übertragen wird. Dieser Zeit-stempel entspricht der aktuellen Uhrzeit des Grandmasters zum Sendezeitpunkt der Sync-Nachricht. Die vom Grandmaster ausgehenden Nachrichten werden nicht weitergeleitet, sondern in jedem Knoten, auch den Switchen, neu erstellt.

Wie in Fig. 6a angegeben kann durch das PTP NRR Verfahren (Neighbor Rate Ratio) die Geschwindigkeit des Taktgebers ermittelt bzw. berechnet werden. Dabei werden zyklische PDelay Nachrichten verwendet, um die Geschwindigkeit (Offset) des Taktgebers zur Referenzuhr auszurechnen. Die ausgelesene oder abgefragte Uhrzeit (Tverdächtig) wird der aktuellen Systemzeit (TReferenz) zugeordnet, somit der Zeit, der vertraut wird, entweder dem Grandmaster oder der Zeit, für die die Daten wichtig sind. Ist die zu untersuchende Komponente ein Sensor, dann könnte als Referenz die Sensorfusionszeit herangezogen werden verglichen. Das bedeutet das erstmal die Differenz der beiden Uhrzeiten ermittelt wird.

$$TAbweichung = TRferenz-Tverdächtig$$

Mithilfe der Synchronisationsfrequenz kann zunächst berechnet werden, wie groß TAbweichung maximal sein dürfte: Bei Ethernet ist die Schnittstelle zwischen PHY (Tranceiver) und MAC die maßgebende Schnittstelle zur Aufnahme der Zeitinformationen. Diese Schnittstelle (xMII) ist mit einer nominalen Frequenz f von 25 MHz getaktet. Quarze für Automotive-Ethernet-AVB/TSN taugliche Implementierungen dürfen eine maximale Ungenauigkeit fo von ±100 ppm nicht überschreiten. Somit verursacht der schlechtmöglichste Quarz in Verbindung mit der Schnittstelle eine Abweichung in der Frequenz von 5 kHz zur nominellen Frequenz f nach Formel:

$$df = (f * fo) /10^6$$

Die Änderung in der Periode zwischen der maximalen (25002500 Hz) und der minimalen Frequenz (24997500 Hz) beträgt 8 ps bei einer Periodendauer von 40 ns. Das bedeutet, dass zwei Quarze (und damit zwei ECUS) in 40 ns eine maximale zeitliche Differenz von 8 ps bei +25 °C zueinander aufweisen können. Exakt 3125000 Perioden a 40 ns sind im Standard-Synchronisationsintervall von 125 ms möglich, was einer maximalen Abweichung von 25 $\mu$s entspricht.

Das Synchronisationsintervall kann laut Spezifikation von IEEE802.1AS zwischen 31.25 ms und 32 Sekunden liegen. Bei kleinstem Intervall bedeutet dies eine Worst Case Abweichung von 6.25$\mu$s und beim größten Intervall von 6,4 ms.

Schematisch ist in Fig. 6b angegeben, wie mittels der vorangegangenen Formel, durch die Ermittlung der Geschwindigkeit des Taktgebers und der Kenntnis des Synchronisationsintervall TAbweichung durch das Verfahren, wann die letzte Synchronisation stattgefunden hat, berechnet werden.

In der in Fig. 1b abgebildetem Ausführungsbeispiel des Ethernet-Bordnetzes 2 weist die erste Steuereinheit 3, die zweite Steuereinheit 4 und die dritte Steuereinheit 5 auf. Weiterhin weist das Ethernet-Bordnetz 2 auch den ersten Verbindungsweg 6, den zweiten Verbindungsweg 7 und den dritten Verbindungsweg 8 auf. Gemäß dem Ausführungsbeispiel wird eine Laufzeit 9 eines ersten Signals 10 auf dem ersten Verbindungsweg 6 bestimmt. Durch die Laufzeit 9 wird beschrieben, wie lange das erste Signal 10 über den ersten Verbindungsweg 6 von der ersten Steuereinheit 3 zur zweiten Steuereinheit 4 oder umgekehrt unterwegs ist. Anhand der Laufzeit 9 des ersten Signals 10 wird eine Maximalgeschwindigkeit 11 des ersten Verbindungswegs 6 bestimmt. Die Maximalgeschwindigkeit 11 des ersten Verbindungswegs 6 variiert dabei beispielsweise je nach Länge des Kabels, der Geschwindigkeit der Übertragung und/oder des Medientyps bzw. der Art des Übertragungsmediums. Anhand der Maximalgeschwindigkeit 11 wird eine Art eines Übertragungsmediums 12 des ersten Verbindungswegs 6 bestimmt.

Gemäß diesem Ausführungsbeispiel wird die Art des Übertragungsmediums 12 als optisch, Kupfer oder drahtlos bestimmt. Bei optisch ist der erste Verbindungsweg 6 beispielsweise als Glasfaserverbindung ausgebildet. Bei Kupfer ist der erste Verbindungsweg beispielsweise durch Kabel mit verdrillten Adernpaaren, beispielsweise ein Kabel mit verdrillten Adernpaaren ohne Schirm (UTP - Unshielded Twisted Pair), ausgebildet. Bei drahtlos ist der erste Verbindungsweg 6 im Wesentlichen als Funkstrecke ausgebildet, und die erste Steuereinheit 3 und/oder die zweite Steuereinheit 4 weisen einen Funkempfänger und/oder Funksender auf bzw. sind damit verbunden.

Die Steuereinheiten 3 ermittelt eine Laufzeit für die Datenübermittlung über das Bordnetzwerk zur Steuereinheiten 4. Wichtig ist, dass die Ermittlung der Laufzeit in irgendeiner Form auf der Basis einer tatsächlichen physischen Gegebenheit des Übertragungsweges von dem ersten Steuereinheiten 3 zur Steuereinheit 4 erfolgt, d.h., dass es eine physische Gegebenheit oder Eigenschaft des Übertragungsweges gibt, deren Änderung zu einer Änderung der ermittelten Laufzeit führt.

Hierbei ermittelt die eine Steuereinheit 3 eine Laufzeit für die Datenübermittlung über das Netzwerk zur Steuereinheit 4. Dies kann auf alternative Weise geschehen. Beispielsweise kann die Laufzeit im Zuge einer Zeitsynchronisation zwischen dem ersten Teilnehmer und dem zweiten Teilnehmer, etwa nach dem Zeitsynchronisationsstandard IEEE 802.1AS und dem darin enthaltenen PTP-Protokoll, erfolgen. So können etwa die im Rahmen dieses Protokolls implementierten "Delay Request"- und "Peer Delay"-Nachrichten als Datenpakete verwendet werden. Das Verfahren ist jedoch hierauf nicht beschränkt. Wichtig ist nur, dass die Ermittlung der Laufzeit in irgendeiner Form auf der Basis einer tatsächlichen physischen Gegebenheit des Übertragungsweges von dem ersten Teilnehmer/Steuereinheit 3 zum zweiten Teilnehmer/Steuereinheit 4 erfolgt, d.h., dass es eine physische Gegebenheit oder Eigenschaft des Übertragungsweges gibt, deren Änderung zu einer Änderung der ermittelten Laufzeit führt.

Weiterhin ermittelt die erste Steuereinheit 3 die Nachrichtenfrequenz, die sich im Prinzip aus der Geschwindigkeit von PLL und Quarz ableitet, der gegenüberliegenden Steuereinheit 4. Aus diesen beiden Werten, welche sich ständig verändern auf Grund von Temperatur, Alterung usw. leitet die Steuereinheit 3 einen Schlüssel zur Verschlüsselung dieser Zeitnachrichten ab.

Die Zeitsynchronisationsnachrichten werden mit dem erzeugten dynamischen Schlüssel verschlüsselt, welcher sich generell ausgedrückt aus individuellen Parametern zum Verbindungspartner ableiten lässt.

Wie in Fig. 3 dargestellt ist zusätzlich auf Basis der Leitungsverzögerung 221 und der Nachrichtenfrequenz 213 ein individueller und sich ständig veränderter Schlüssel generiert werden. Dieser Schlüssel ist einmalig pro Zeiteinheit und auch pro Link unterschiedlich. Durch diesen Ansatz gibt es keinen Schlüssel zweimal im Netzwerk. Durch die Generierung der Schlüssel aus der Kombination von Punkt-zu-Punkt-Leitungsverzögerung und der Frequenz des Quarzes wird der Schlüssel besonders resistent gegen Umgehungsversuche, da sich zum einen der Schlüssel ständig verändert und zum anderen auf jedem Link im Fahrzeugnetzwerk unterschiedlich sein wird.

Die beiden Werte können entweder direkt in Kombination verwendet werden oder noch um andere statische Werte, welche beiden Steuergeräten bekannt sein müssen wie bspw. die Adresse, erweitert werden, um die Schlüssel zu generieren. Die jeweilige Steuereinheit, wobei das Verfahren auf beide Steuereinheiten, bzw. Teilnehmer/Linkpartner ausführbar sind, ermittelt daraus einen Zufallswert, um den individuellen und nur kurzfristig geltenden Schlüssel für die Verschlüsselung zu erhalten. Der Schlüssel verändert sich immer wieder, basierend auf den vorangegangenen Messungen, welche keinen Zusatzaufwand darstellen, da diese zur Zeitsynchronisation benutzt werden.

Die Art des Übertragungsmediums 12 wird einem Programm 13 im Ethernet-Bordnetz 2 mitgeteilt. Das Programm 13 kann beispielsweise in der ersten Steuereinheit 3, der zweiten Steuereinheit 4 oder der dritten Steuereinheit 5 oder einer weiteren Steuereinheit des Ethernet-Bordnetzes 2 vorhanden sein. Abhängig von der Art des Übertragungsmediums 12 wird eine Verbindungswegwahl 14 angepasst. So kann das Programm 13 beispielsweise durch die Verbindungswegwahl 14 Daten über einen anderen Verbindungsweg als vor der Verbindungswegwahl senden. Das Programm 13 kann aber beispielsweise auch das Senden von Daten durch die Verbindungswegwahl 14 unterbrechen und zu einem späteren Zeitpunkt wieder aufnehmen.

Gemäß dem Ausführungsbeispiel wird dem ersten Verbindungsweg 6 anhand der Art des Übertragungsmediums 12 ein Übertragungssicherheitswert 15 zugewiesen. Durch den Übertragungssicherheitswert wird eine Verlustwahrscheinlichkeit von über den Verbindungsweg übertragenen Daten beschrieben. Der Übertragungssicherheitswert 15 lässt also eine Aussage zu, wie zuverlässig die Daten über den ersten Verbindungsweg übertragen werden können. Dies wird der Entropiequelle 200 zugeführt. Ist beispielsweise ein Sicherheitsgrenzwert unterschritten und die Daten können nur unsicher übertragen werden, so ist damit zu rechnen, dass die Daten verzögert ihr Ziel erreichen oder aber, falls sich ein nochmaliges Senden aufgrund der benötigten Aktualität der Daten nicht lohnt, gar nicht ihr Ziel erreichen.

Gemäß einem weiteren Ausführungsbeispiel werden Laufzeiten von einer Mehrzahl von Signalen auf dem ersten Verbindungsweg 6 bestimmt, und die schnellste Laufzeit der Mehrzahl der Signale wird ausgewählt. Die Maximalgeschwindigkeit 11 des ersten Verbindungswegs 6 wird dann anhand der schnellsten Laufzeit bestimmt.

Eine Steuereinheit startet die Verzögerungsmessung und wartet auf dem Empfang der Linkpartner Nachrichten. Auf Basis des Empfangs der Nachrichten am Beispiel PTP kann die Leitungsverzögerung gemessen werden. Wenn der eine Linkpartner die Verzögerungsmessung startet, dann bekommt dies der andere Linkpartner zwangsläufig mit und soll ebenfalls eine Messung starten, damit diese beiden Messungen auch einen zusammengehörigen Messwert generieren können,

Analog zu der vorstehend beschriebenen Vorgehensweise kann auch die Art des Übertragungsmediums 12 für den zweiten Verbindungsweg 7 und/oder den dritten Verbindungsweg 8 bestimmt werden.

Die jeweiligen aufgenommenen Werte sind unterschiedlich, bleiben jeweils geheim und im Steuergerät abgespeichert, und werden zudem nicht über das Netzwerk übertragen - müssen Sie auch nicht. Dass Herausfinden des Schlüssels durch bloßes Probieren ist hinreichend unwahrscheinlich. Unter Berücksichtigung der beiden Werte wird ein individueller Schlüssel generiert. Zum einen ist die Frequenz eines jeden Quarzes unterschiedlich und zum anderen ist die Leitungsverzögerung jedes Links unterschiedlich. Hier werden zwei schwankende Werte addiert und geben einen noch schwerer zu erratenden dritten Wert - den Wert des Schlüssels. Die Leitungsverzögerung kann typischerweise im Bereich von 50-500 Nanosekunden ausfallen und die Frequenz ist ein Parameter und wird in +/- ppm angegeben. Die Leitungsverzögerung hin und rückwärts basiert auf dem gleichen Kanal, weshalb die berechneten Werte auf beiden Seiten des Links gleich sind. Die Parameter müssen deshalb nicht ausgetauscht werden. Somit haben beide Partner nahezu zur gleichen Zeit die gleichen Werte zur Generierung des Schlüssels. Der eine Linkpartner verschlüsselt mithilfe dieser beider Werte entstehend aus der letzten Messung und der andere Linkpartner entschlüsselt mit seinen letzten Werten.

So ist es auch vorgesehen, dass eine Laufzeit 16 eines zweiten Signals 17 auf dem zweiten Verbindungsweg 7 bestimmt wird. Es wird dann eine Maximalgeschwindigkeit 18 des zweiten Verbindungswegs 7 anhand der Laufzeit 16 des zweiten Signals 17 bestimmt. Anhand der Maximalgeschwindigkeit 18 des zweiten Verbindungswegs 7 wiederum wird eine Art des Übertragungsmediums 19 des zweiten Verbindungswegs 7 bestimmt.

Es ist vorteilhaft, den aktuellen Schlüssel A1 zu verwenden, solange keine neue Leitungsmessung durchgeführt wird. Somit weiß der Linkpartner immer, welcher Schlüssel zu verwenden ist, wenn keine neue Leitungsmessung vorher angestoßen wurde. Ein neuer Schlüssel soll/kann entweder zyklisch generiert werden, z. B. vorgegebene Frequenz, nach Bedarf gestartet werden durch einen Trigger oder immer direkt vor dem Senden von wichtigen Nachrichten.

Sowohl die erste Steuereinheit 3 als auch die zweite Steuereinheit 4 und auch die dritte Steuereinheit 5 können in einem Normalbetriebsmodus oder in einem Energiesparmodus betrieben werden. Im Energiesparmodus verbraucht die jeweilige Steuereinheit weniger Energie als im Normalbetriebsmodus. Es kann beispielsweise im Energiesparmodus die Geschwindigkeit eines Ports der jeweiligen Steuereinheit gegenüber der Geschwindigkeit im Normalbetriebsmodus reduziert werden. Die reduzierte Geschwindigkeit des Ports hat dann auch Auswirkung auf die jeweilige Maximalgeschwindigkeit des jeweiligen Verbindungswegs.

Gemäß einem weiteren Ausführungsbeispiel kann von der ersten Steuereinheit 3 eine Dienstnachricht 20 an die dritte Steuereinheit 8 gesendet werden. Durch die Dienstnachricht 20 wird dann die Bestimmung einer Laufzeit 21 eines dritten Signals 22 ausgelöst. Das dritte Signal 22 wird zwischen der zweiten Steuereinheit 4 und der dritten Steuereinheit 5 gesendet. Die Laufzeit 21 des dritten Signals 22 wird gemäß dem Ausführungsbeispiel durch die dritte Steuereinheit 5 bestimmt.

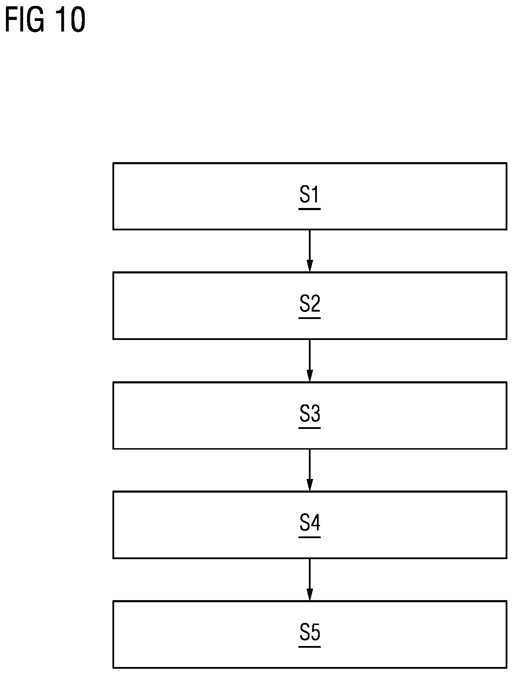

Fig. 10 beschreibt allgemein das Verfahren zur Laufzeitbestimmung. In einem Schritt S1 wird die Laufzeit 9 des ersten Signals 10 bestimmt. In einem Schritt S2 wird die Art des Übertragungsmediums 12 bestimmt. In einem Schritt S3 wird schließlich das Programm 13 angepasst. In einem Schritt S4 wird die Laufzeit 9 des ersten Signals 10 bestimmt. Dadurch kann in einem Schritt S5 die Art des Übertragungsmediums 12 bestimmt werden. Die Art des Übertragungsmediums 12 kann wiederum folgende Parameter umfassen: Geschwindigkeit 23, Medium 24, Kabellänge 25, Leistungsübertragung 26, Bitfehlerrate 27. In einem Schritt S6 folgt dann schließlich die Anpassung des Programms 13 und die Verbindungswegwahl 14.

Gemäß diesem Beispiel wird vorgeschlagen, zwischen verbundenen Steuereinheiten bzw. Controllern die Laufzeit der Signale zu messen. Zum Messen der Laufzeiten 9, 16 und 21 können beispielsweise Methoden des Standards IEEE 1588 oder IEEE 802.1AS genutzt werden. Auch durch TTEthernet (time triggered ethernet) können beispielsweise Methoden bereitgestellt werden, um die jeweilige Laufzeit 9, 16 und 21 zu bestimmen.

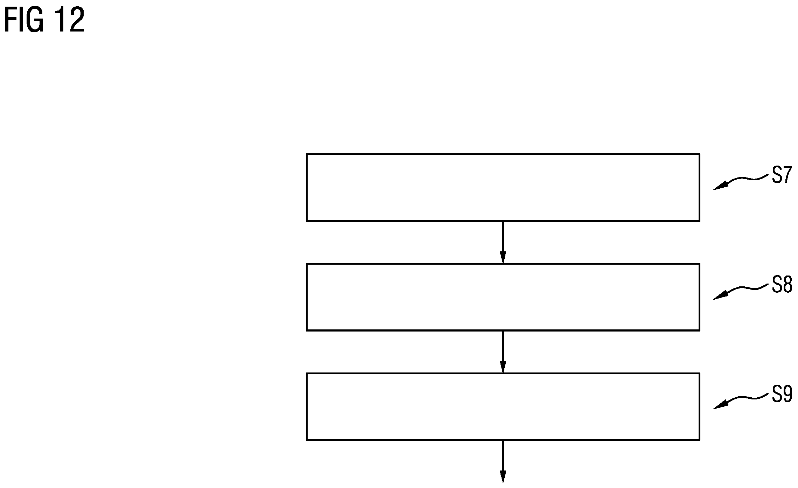

Fig. 12 zeigt das Bestimmen der jeweiligen Laufzeit 9, 16 und 21. Es wird eine lokale und eine nicht lokale Abfrage der Laufzeit beschrieben. Das Programm 13, welches insbesondere auf mindestens einer Steuereinheit ausgeführt wird, bestimmt vorzugsweise erst mal lokal die lokale Laufzeit oder die Laufzeiten, wenn mehr als eine Steuereinheit direkt verbunden ist. Danach werden vorzugsweise andere Steuereinheiten über ein serviceorientiertes Verfahren, beispielsweise SOME/IP (Scalable Service-Oriented Middleware over IP) deren Laufzeit zu dem Nachbarn abgefragt. Dies kann entweder zentral oder dezentral umgesetzt werden. Die Abfrage kann entweder einmal, bei Systemstart, Definition oder nach Softwareupdate durchgeführt werden, oder aber zyklisch ausgeführt werden, um dynamische Änderungen zu erkennen. Diese Daten werden dann, insbesondere inklusive der Adressen der Steuereinheiten, beim ersten Mal gespeichert und zugeordnet. In einem Schritt S7 wird die jeweilige Laufzeit zu den direkt verbundenen Steuereinheiten bestimmt. In einem Schritt S8 werden die jeweiligen Laufzeiten von anderen Verbindungswegen abgefragt. In einem Schritt S9 werden die jeweiligen Laufzeiten und deren zugehörige Verbindungspartner gespeichert.

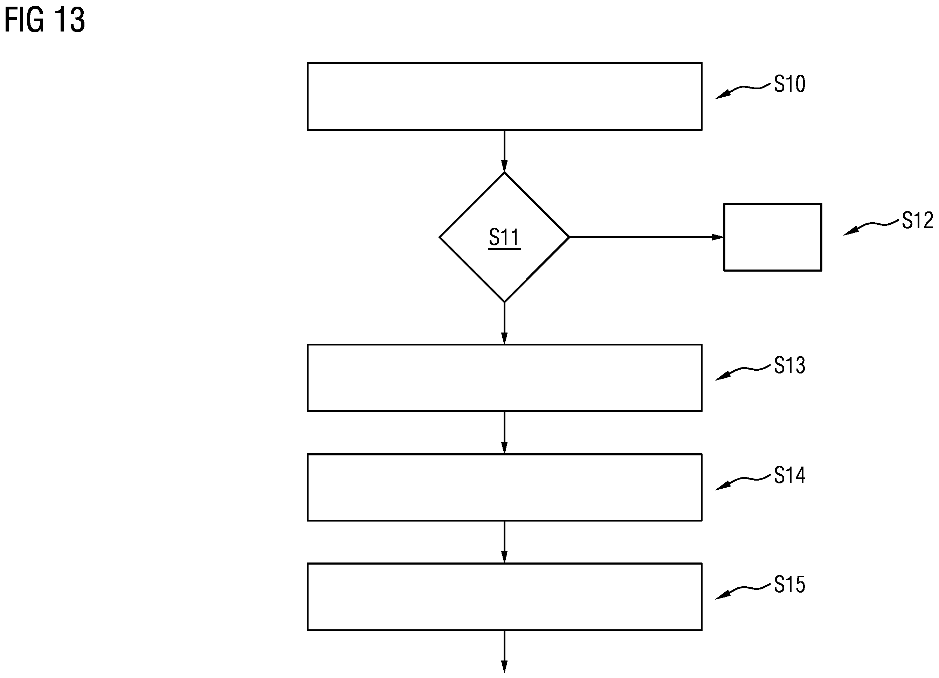

Fig. 13 zeigt ein weiteres Verfahren, um auf Basis einer Referenzmessung die anderen Geschwindigkeiten abzuleiten. Wenn beispielsweise die aktuelle Temperatur sehr hoch ist oder schlechte Kabel verwendet werden, dann können vorgespeicherte Werte eventuell zu ungenau sein. Daher wird vorgeschlagen, dass die Anwendung bzw. das Programm 13 an ihrer eigenen Steuereinheit selber Messungen durchführt, insbesondere unter Kenntnis der eigenen Parameter, und anderen Geschwindigkeiten, welche dann daraus abgeleitet und berechnet werden können. In einem Schritt S10 wird eine Analyse pro lokalem Ethernet-Port durchgeführt. In einem Schritt S11 wird abgefragt, ob Kanalparameter bekannt sind. Ist dies nicht der Fall, so folgt ein Schritt S12, und das Verfahren ist beendet. Ist dies der Fall, so folgt ein Schritt S13, in welchem die jeweilige Laufzeit 9, 16 und 21 bestimmt wird. In einem Schritt S14 erfolgt die Speicherung, und die bestimmte Laufzeit wird in Bezug zu den Kanalparametern gesetzt. In einem Schritt S15 wird eine Referenzwertliste erstellt.

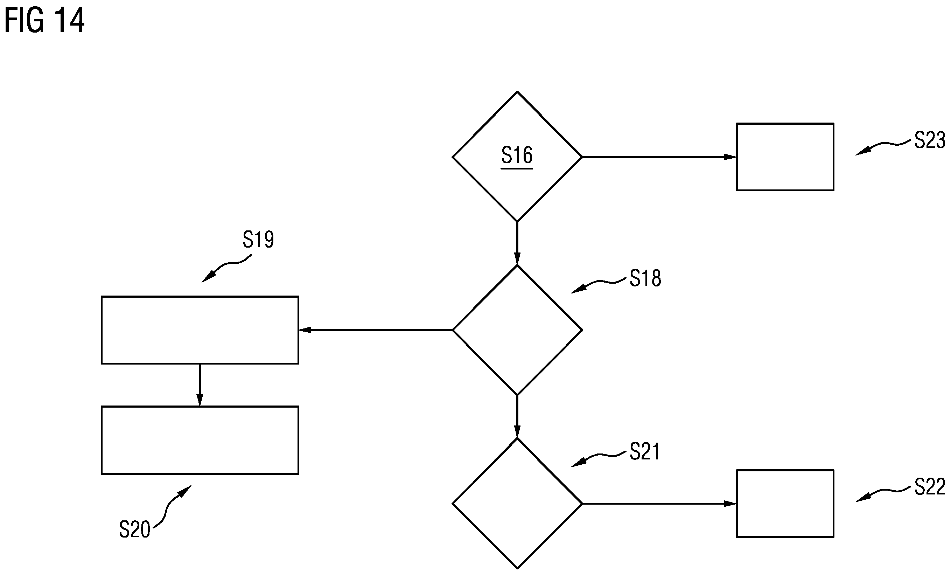

Fig. 14 zeigt eine mögliche Optimierung durch Wissen über die Art des Übertragungsmediums 12, 19. In einem Schritt S16 wird entschieden, ob die Art des Übertragungsmediums 12, 19 Kupfer ist. Ist dies der Fall, so folgt ein Schritt S17, bei welchem bestätigt wird, dass PoDL (Power over Data Lines), also die Stromversorgung über Ethernet möglich ist. Wird im Schritt S16 entschieden, dass das Medium nicht Kupfer ist, so folgt ein Schritt S18. Im Schritt S18 wird überprüft, ob die Art des Übertragungsmediums 12 optisch ist. Ist dies der Fall, so folgt ein Schritt S19. Im Schritt S19 wird festgestellt, dass dadurch eine geringere Bitfehlerrate vorliegt und dadurch eine höhere Zuverlässigkeit dieses Verbindungswegs vorliegt. In einem Schritt S20 wird die Möglichkeit gegeben RX (Empfangseinheit) oder TX (Sendeeinheit) der Steuereinheit 3, 4, 5 zu deaktivieren, falls dies nicht benötigt ist.

Wird im Schritt S18 entschieden, dass das Medium bzw. die Art des Übertragungsmediums 12 nicht optisch sind, so wird in einem Schritt S21 davon ausgegangen, dass der jeweilige Verbindungsweg als der betreffende Verbindungsweg als direkte MII-Verbindung (Media Independent Interface) ausgebildet ist. In diesem Fall eignet sich die jeweilige Steuereinheit beispielsweise für IEEE 802.1CB (Frame Replication and Elimination for Redundancy).

Weitere Möglichkeiten ergeben sich aus dem Wissen über die Übertragungsgeschwindigkeit. Kombiniert mit den aktuellen Datenströmen können beispielsweise Daten gezielt über eine hochbandbreitige Verbindung übertragen werden und somit andere, nicht benötigte Verbindungswege deaktiviert werden, wodurch Energie gespart werden kann.

Außerdem besteht bei hochbandbreitigen Verbindungen die Möglichkeit, Redundanzmechanismen (z.B. IEEE 802.1CB) zu verwenden. Da die Daten hierbei kontinuierlich redundant übertragen werden, ist dafür eine hohe Bandbreite notwendig. Denkbar ist auch eine Anpassung der Anwendung je nach Geschwindigkeit des Übertragungswegs. Eine Kamera kann beispielsweise je nach Geschwindigkeit des Links bzw. des Verbindungswegs 6, 7, 8 die Auflösung der zu übertragenden Bilddaten anpassen.

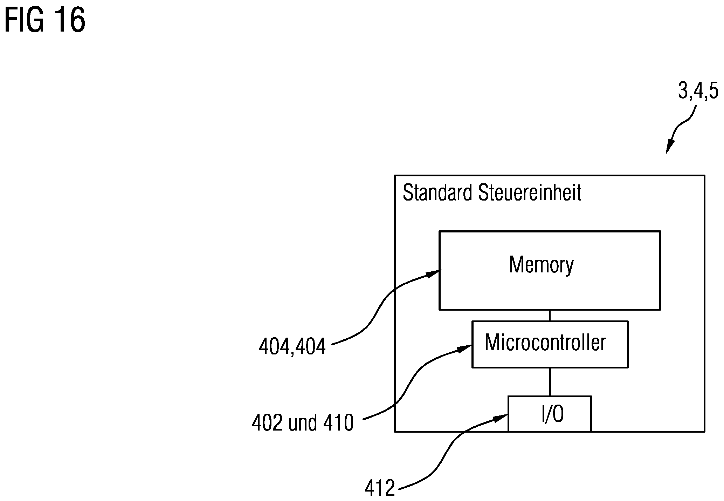

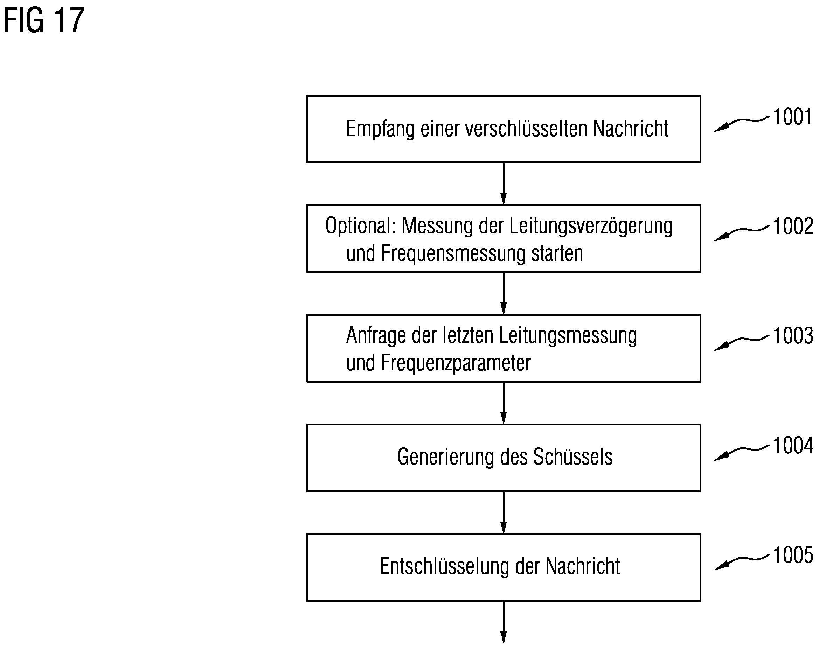

Die Steuereinheit 3, 4, 5 in Fig. 16 umfasst neben einem Mikroprozessor 402 einen flüchtigen und nichtflüchtigen Speicher 404, 406, zwei Kommunikationsschnittstellen 408 sowie einen synchronisierbaren Zeitgeber 410. Die Elemente des Netzwerkgeräts sind über eine oder mehrere Datenverbindungen oder -busse 412 kommunikativ miteinander verbunden. Der nichtflüchtige Speicher 406 enthält Programminstruktionen die, wenn sie von dem Mikroprozessor 402 ausgeführt werden, zumindest eine Ausgestaltung des Verfahrens implementieren und die Entropiequelle im flüchtigen und/oder nichtflüchtigen Speicher 404, 406 gebildet wird, aus der dann die dynamischen Schlüssel 28 für die Verbindungswege 6 gebildet werden. In Fig. 17 ist der Dekodierungsablauf des dynamischen Schlüssels bei der Entschlüsselung angegeben.

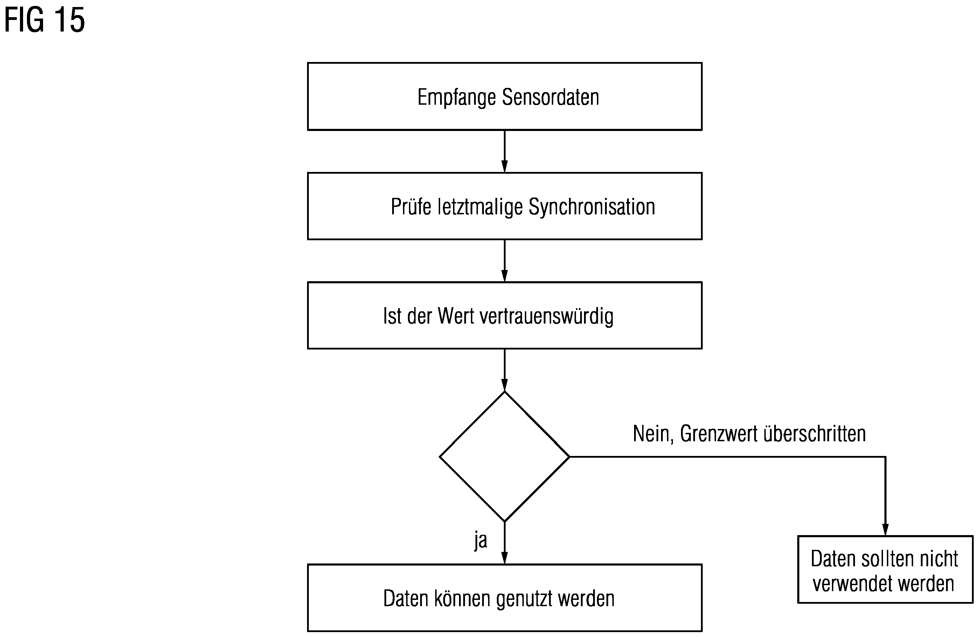

In Fig. 15 ist dargestellt, wie eine Bewertung der Verwendung von empfangenen Daten auf Basis dessen letzten erfolgreichen Synchronisationszeitpunktes erfolgt. Durch diesen Ablauf kann ermittelt werden, ob die geprüften Daten, die sich vor einer Speicherung befinden für den jeweiligen Einsatz auch eignen. Besonders vorteilhaft ist dies, wenn die Speicherung auf einem Datenrekorder erfolgt. Für den Datenrekorder ist es maßgeblich interessant, ob die Daten auch inhaltlich korrekt sind. Im Falle eines Unfalles ist es wichtig, ob bspw. die Kamera den Fußgänger erkannt hat oder nicht. Wenn falsche Daten aufgezeichnet werden oder Daten mit einem falschen Zeitpunkt, dann ist die Aufzeichnung ungültig und kann ohne das Verfahren nicht als solche erkannt werden.

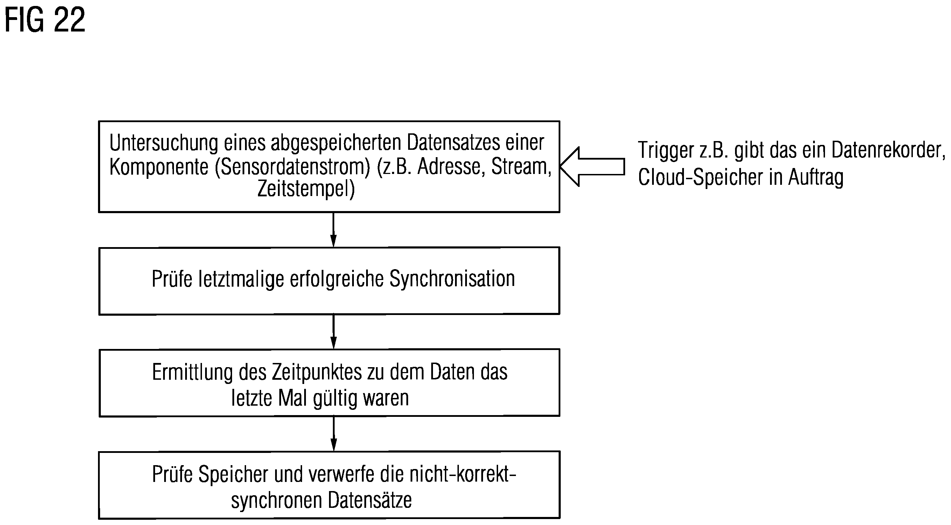

Die abfragende Komponente analysiert einen Datenstrom und dessen Absender, wie in Fig. 22 dargestellt. Auf Basis des Verfahrens kann ermittelt werden, wann den Daten das letzte Mal vertraut wurde. Die nominalen Grenzwerte hierbei bestimmen entweder die Funktionen, die Systemhersteller oder den Anwendungsfall als solchen selbst. Dieser kann pro ECU und pro Anwendungsfall verschieden sein. Auf Basis dieses Grenzwertes können die Daten für gültig, ungültig oder auch nicht vertrauenswürdig eingestuft werden.

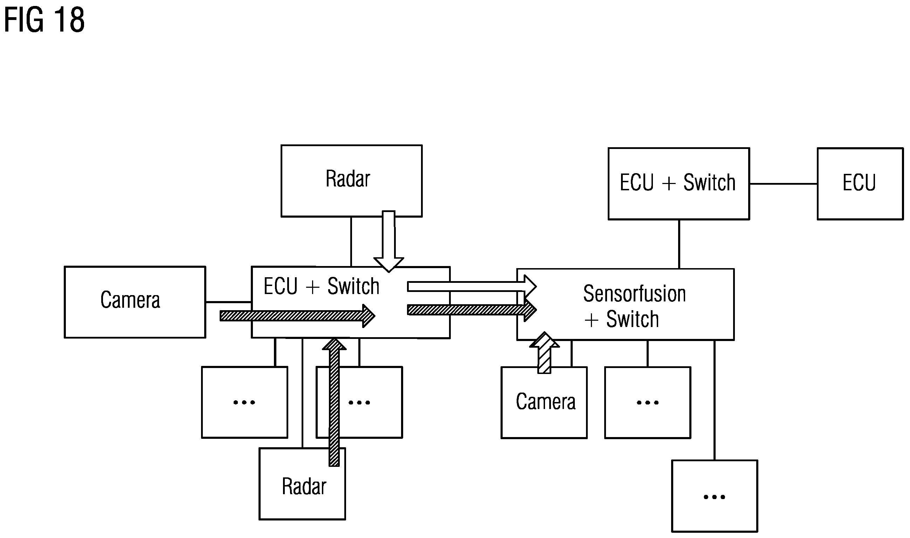

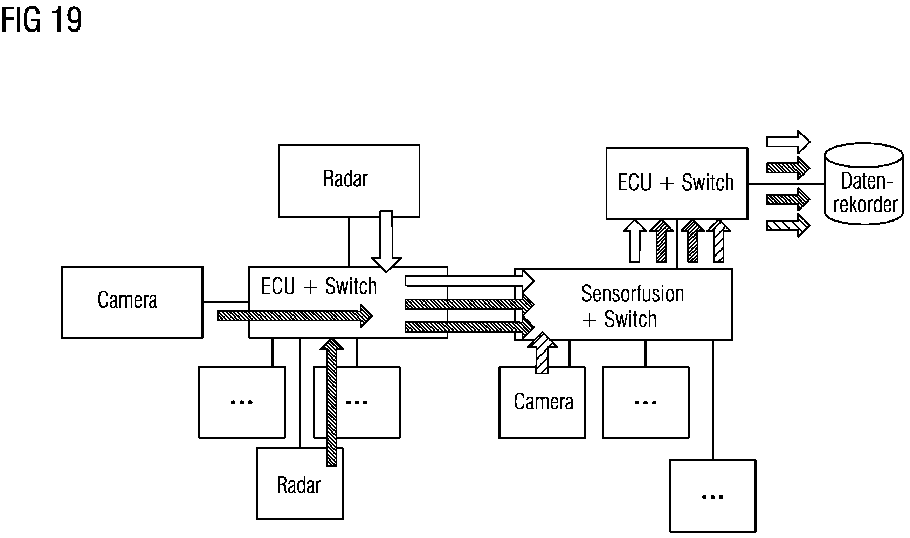

Fig. 18 und Fig. 19 zeigen zwei Anwendungsfälle, bei denen die Zeitsynchronisation essentiell wichtig ist, und das Verfahren zum Einsatz kommt. Zum einen müssen verschiedene Daten von verschiedenen Sensoren/Steuergeräten fusioniert werden, die auf Basis der Zeitinformationen in der Sensornachricht enthalten sind, und zum anderen können sie auch abgespeichert werden, um einen Nachweis im Falle eines Fehlers zu haben.

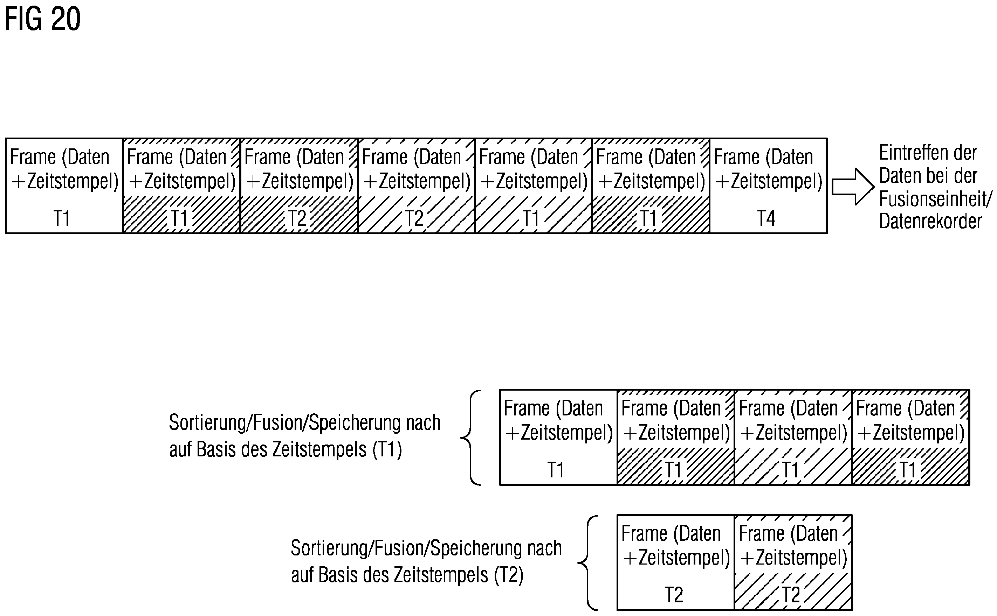

Fig. 20 zeigt, dass sowohl bei der Fusion der Daten und als auch der Abspeicherung als Basis die Zeitstempel in den Daten benutzt werden, damit die richtigen Daten zeitlich zugeordnet werden können.

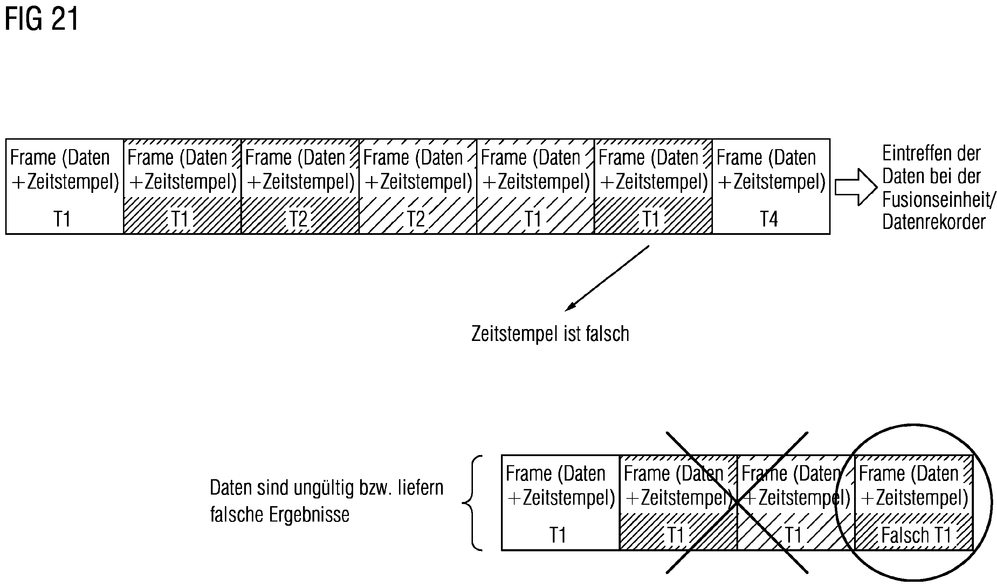

Fig. 21 zeigt das Eintreffen verschiedener Sensordaten-Frames an einer Fusionseinheit oder auch bspw. an einem Datenrekorder. Dieser ordnet die Daten nicht nach deren Eintreffens-Reihenfolge, sondern nach deren Zeitstempel, die auf Basis einer vorhergehenden Zeitsynchronisation erfolgt ist, zu. Da in einem Netzwerk die Daten unterschiedlich lange Wege nehmen müssen, wird typischerweise auf Basis der Erstellung dieser Sensordaten sortiert, wenn diese aufgenommen wurden.

In Fig. 21 ist dargestellt, dass ein Zeitstempel falsch, d.h. dass eine Inkonsistenz in den Sensordaten bei der Fusion eingetreten ist, bei der die Zeitsynchronisation fehlerhaft ist, und bei dem das hier vorgeschlagene Verfahren nicht zum Einsatz kam. Durch das Verfahren wird Präzision und Genauigkeit der Uhrensynchronisation für die Echtzeitfähigkeit des Ethernet-Bordnetzwerkes verbessert. Ein Maß für die Qualität eines Synchronisationsprotokolls ist vor allem dessen erzielbare Synchronisationsgenauigkeit, welche sich als Zusatzinformation aus dem Verfahren ableiten lässt.

Aus Fig. 22 ist der Ablauf zu entnehmen, in welcher Art eine rückwirkende Löschung von Daten erfolgt, wenn der Synchronisationszeitpunkt oberhalb des Grenzwertes liegt angeben. Das Verfahren findet bspw. auch Anwendung, wenn bereits gespeicherte Daten (oder kurz vor der Speicherung) vorliegen, wie beim Anwendungsfall Datenrekorder. Für den Datenrekorder ist es maßgeblich interessant, ob die Daten auch inhaltlich korrekt sind - im Fall eines Unfalles ist es wichtig, ob bspw. die Kamera den Fußgänger erkannt hat oder nicht. Wenn falsche Daten aufgezeichnet werden oder Daten mit einem falschen Zeitpunkt, dann ist die Aufzeichnung ungültig. Die abfragende Komponente analysiert einen Datenstrom und dessen Absender wie in Fig. 22 angegeben. Auf Basis des Verfahrens kann ermittelt werden, wann den Daten das letzte Mal vertraut wurde. Die nominalen Grenzwerte hierbei bestimmen entweder die Funktionen, die Systemhersteller oder der Anwendungsfall als solches selbst. Dieser kann pro ECU und pro Anwendungsfall verschieden sein. Auf Basis dieses Grenzwertes können die Daten für gültig, ungültig oder auch nicht vertrauenswürdig eingestuft werden.

Die abfragende Komponente kann ein Datenrekorder, ein Cloud-Speicher sein, der einen Auftrag zur Untersuchung eines abgespeicherten Datensatzes einer Komponente, wie einen Sensordatenstrom, überprüfen möchte. Hierzu können bspw. die Adresse, Stream, Zeitstempel geprüft werden. Es wird hierzu letztmalig eine erfolgreiche Synchronisation geprüft, und eine Ermittlung des Zeitpunktes, zu dem Daten das letzte Mal gültig waren, durchgeführt. Es erfolgt eine Prüfung des Speichers, und es werden nicht-korrekt-synchrone Datensätze hierbei verworfen.

Figur 1.1 zeigt bekannte Aufbauten von Osszilatoren. Die in Quarzoszillator-Schaltungen, wie in Figur 1a dargestellt, verwendeten Schwingquarze sind meist Kristallplättchen, -stäbe oder -gabeln (wie eine Stimmgabel), die durch elektrische Spannung zu mechanischen Formänderungen gebracht werden können, die wiederum eine elektrische Spannung erzeugen. Die Reaktion ist durch die mechanischen Schwingungsmodi des piezoelektrischen Kristalls gegeben.

Ein Schwingquarz wird bei einer Wechselspannung bestimmter Frequenz, seiner Resonanzfrequenz, zu besonders starken Resonanzschwingungen angeregt (diese Eigenschaft besitzen auch piezoelektrische Schallgeber). Sie ist bei geeignetem Kristallschnitt fast unabhängig von Umgebungseinflüssen wie Temperatur oder Amplitude und wird deshalb als präziser Taktgeber mit einer Langzeitstabilität besser als 0,0001 % verwendet.

Schwingende Quarzplatten haben zwei elektrisch zu unterscheidende elektrisch/mechanische Modi: Bei Reihenresonanz ist ihr scheinbarer Widerstand für den Wechselstrom besonders gering und sie verhalten sich wie eine Reihenschaltung aus einer Spule und einem Kondensator.

Bei Parallelresonanz ist der scheinbare Widerstand besonders groß. Dann verhalten sie sich wie eine Parallelschaltung von Kondensator und Spule mit der Besonderheit, dass kein Gleichstrom fließen kann (Quarz ist ein sehr guter Isolator).

Die Parallelresonanz liegt etwa 0,1 % höher als die Serienresonanz. Ein vergleichbares Schwingverhalten findet man auch bei der dreifachen, fünffachen usw. Grundfrequenz. Einen Quarz mit einer Resonanzfrequenz von 9 MHz kann man so auch auf 27 MHz oder auf 45 MHz schwingen lassen. Speziell dafür geeignete Oberwellenquarze besitzen eine entsprechende Aufhängung, um diese Oberschwingungen nicht zu behindern.

Der Arbeitspunkt des Schwingquarzes im Quarzoszillator liegt zwischen den o. g. Eigenresonanzen. In diesem Frequenzbereich verhält sich der Schwingquarz induktiv wie eine Spule. Zusammen mit seiner nominellen kapazitiven Last schwingt der Quarzoszillator bei seiner nominellen Lastresonanzfrequenz. Leichte Abweichungen von der Nennfrequenz können, durch eine Änderung/Abweichung von der nominellen Lastkapazität, erzeugt oder kompensiert werden.

Die Frequenz ist leicht temperaturabhängig, wie bereits erwähnt. Für größere Ansprüche an den Temperaturgang gibt es temperaturkompensierte Oszillatoren (TCXO - englisch *Temperature Compensated Crystal Oscillator*). Dabei werden zumeist Thermistoren eingesetzt, die eine Regelspannung erzeugen, die der temperaturabhängigen Frequenzänderung des Quarzes entgegenwirken, wie in Figur 1.1b dargestellt. Die so erzeugte Spannung wird üblicherweise an eine Kapazitätsdiode angelegt, so dass die dadurch veränderte Kapazität die Frequenz des Quarzoszillators korrigiert.

Ist eine noch höhere Genauigkeit erforderlich, wird ein Quarzofen verwendet, wie in Figur 1.1c illustriert. Dabei ist der Quarz in ein temperaturgeregeltes Gehäuse eingebaut, um umgebungstemperaturabhängige Einflüsse zu minimieren. Darin wird der Quarz elektrisch auf z. B. 70 °C erhitzt. Diese Bauform heißt OCXO (englisch *Oven Controlled Crystal Oscillator*). Das "X" steht jeweils für *Xtal,* die Kurzform von *Crystal.*

Figur 2.1 zeigt das Frequenz-Temperatur Charakteristik verschiedener Quarz Typen. Für Ethernet werden im Automotive-Bereich AT-Quarze eingesetzt.

Wie bereits erläutert ist die Frequenz ist leicht temperaturabhängig. Die Erfindung macht sich diese Eigenschaft der Quarze zu Nutze, um daraus die Temperaturveränderung abzuleiten. Wie in Figur 3.1 dargestellt, haben Temperaturveränderungen direkte Einwirkung auf den Quarz und damit auf die ungesteuerte PLL des Ethernet Transceivers. Dies wiederum hat Auswirkungen auf die Generierung der Takte zum Versenden der zyklischen PTP-Nachrichten. Im Automotive Bereich kommen für Ethernet immer ein AT-cut Quarze zum Einsatz da Sie eine sehr gute Temeraturstabilität aufweisen. Der Temperatureinfluss hat zudem stets ein berechenbare Auswirkungen.

In Fig. 3.1 ist das Systemmodell der Zeitsynchronisation von Ethernet dargestellt, und welche Einwirkungen auf den Quarz die Temperaturveränderungen haben und damit auf die ungesteuerte PLL des Ethernet Transceivers. Dies wiederum hat Auswirkungen auf die Generierung der Takte zum Versenden der zyklischen PTP-Nachrichten. In der Fahrzeugtechnik kommt für Ethernet immer ein AT-cut Quarze zum Einsatz da Sie eine sehr gute Temeraturstabilität aufweisen. Der Temperatureinfluss hat zudem stets ein berechenbare Auswirkungen.

In Fig. 4.1 wird das vorgeschlagene Verfahren erläutert und beginnt mit dem Start der Laufzeitmessung. Dabei wird der ECU über das Netzwek eine PDelay_Request Nachricht gesendet. Diese ECU antwortet mit einer PDelay_Response und einer PDelay_Response_FollowUP-Nachricht. Mit Hilfe dieser Nachrichten und dessen Eintreffenszeitpunkt (Hardwarezeitstempel) wir die NRR berechnet - also der Frequenzoffset zur eigenen Uhr, d.h. dass hierbei der Frequenzoffset zwischen den beiden Taktgebern gemessen werden kann.

Durch die Lauzeitmessung (Messung der Verzögerung zwischen Knoten (Kabel + PHY)) kann zusätzlich das Neighbor Rate Ratio ermittelt werden. Das NRR misst den Frequenzoffset zwischen zwei Clocks (Quarzen zweier PHYs bzw. ECUs). Beispielsweise wird damit ermittelt wie groß die Differenz in ppm ist. Dies ist möglich da Ethernet Hardware- statt Softwarezeitstempel benutzt.

NRR =1 würde bedeuten beide Quarze/PLLs laufen exakt gleich schnell (aufgrund von Fertigungstoleranzen, ...kaum möglich). NRR = 0.99998 würde bedeuten, dass der Quarz um 20ppm langsamer läuft.

Das Verfahren bestimmt fortlaufend die Taktrate des Quarzes durch Messungen der Laufzeit zwischen den Komponenten (dies funktioniert auch innerhalb einer ECU über die PCB). Diese Daten werden protokolliert und mit bereits aufgezeichneten Werten verglichen. Wenn sich die Abweichung verändert (stets unter Berücksichtigung der eigenen lokalen Uhr/Taktgeber), dann kann erstmal ermittelt werden, ob ein Temperaturanstieg oder -abfall die Grundlage ist. (Auch Alterung hat eine Auswirkung auf den Taktgeber aber wirkt sich sehr langsam aus und hat gar keinen Einfluss bei Messungen, die nacheinander gemacht werden).

Wenn eine Referenzmessung vorliegt, das heißt, wenn bestimmt bzw. zugeordnet werden kann wie schnell oder langsam der Takt zu einer gegebenen Temperatur ist, dann kann auch die Temperatur direkt abgeleitet werden. Auf Basis dieser Temperatur kann bspw. mit einem Fehler (Rückmeldung, Error-Code...) reagiert werden oder auch mit Anpassung der Synchronisation.

Beispiel: Nach Figur 2.1 würde eine um 20ppm langsamere Clock, wenn sich der Messpartner bei Raumtemperatur befindet, bei einer derzeitigen Umgebungstemperatur von circa 60 Grad arbeiten.

Die Komponente, die die Temperatur wissen möchte, kann ein Netzwerkmanager einer zentralen ECU sein, welcher bspw. Software verlagern bzw. freie Ressourcen sucht. Auf Basis der erhaltenen Temperatur (Temperaturveränderung) kann die Einheit entscheiden, Software auszulagern oder auch Software dahin zu verschieben.

Auf Basis der vorhandenen Ressourcen der Server-Komponenten kann das Verfahren dazu genutzt werden, um Software auf die Komponenten zu verlagern, die nicht kurz vor dem Kollaps stehen.

Durch das beschriebene Verfahren können Funktionen und Anwendungen auf andere Steuergeräte/Prozessoren (dynamisch) ausgelagert werden, also auch um diese zu optimieren. Dies wird als Live-Migration, Reallokation oder Migration bezeichnet.

Durch den hier beschriebenen Ansatz gibt es nun erstmal Möglichkeiten Software auch auf verschiedenen ECUs zu implementieren, da die Hardware generalisierter wird und die Software plattformunabhängiger. Es steht also zur Designzeit des Systems nicht immer fest auf welchem Steuergerät (Server) welche Software laufen wird.

Wie in Fig. 7.1 erläutert, kann die Komponente, die die Temperatur wissen möchte, ein Netzwerkmanager einer zentralen ECU sein, welcher bspw. Software verlagern bzw. freie Ressourcen sucht. Auf Basis der erhaltenen Temperatur (Temperaturveränderung), die über das Netzwerk bestimmt werden kann, kann die Einheit entscheide Software auszulagern oder auch Software dahin zu verschieben.

Auf Basis der vorhandenen Ressourcen der Server-Komponenten kann das Verfahren dazu genutzt werden, um Software auf die Komponenten zu verlagern, die nicht kurz vor dem Kollaps stehen, wodurch eine höherer Gesamtstabilität des Gesamtnetzwerkes erreicht wird.

Fig. 8.1 zeigt die Verwendung des Verfahrens bei der Entscheidung zur Verlagerung von Software/Ressourcen. Die Adresse des Grandmasters ist in den Synchronisationsnachrichten enthalten.

Bezugszeichenliste

1 Kraftfahrzeug
2 Ethernet-Bordnetz
3 erste Steuereinheit
4 zweite Steuereinheit
5 dritte Steuereinheit
6 erster Verbindungsweg
7 zweiter Verbindungsweg
8 dritter Verbindungsweg
9 Laufzeit des ersten Signals
10 erstes Signal
11 Maximalgeschwindigkeit des ersten Verbindungswegs
12 Art des Übertragungsmediums des ersten Verbindungswegs
13 Programm
14 Verbindungswegwahl
15 Übertragungssicherheitswert
16 Laufzeit des zweiten Signals
17 zweites Signal
18 Maximalgeschwindigkeit des zweiten Verbindungswegs
19 Art des Übertragungsmediums des zweiten Verbindungswegs
20 Dienstnachricht
21 Laufzeit des dritten Signals
22 drittes Signal
23 Geschwindigkeit
24 Medium
25 Kabellänge
26 Leistungsübertragung
27 Bitfehlerrate
28 dynamischer Schlüssel
29 Zeitsynchronisationsnachricht
200 Entropiequelle
211 Senden zum Zeitpunkt t1
212 Empfang zum Zeitpunkt t4
213 Empfang zum Zeitpunkt t4
221 Empfang zum Zeitpunkt t2
222 Senden zum Zeitpunkt t3
223 Verzögertes Senden zum Zeitpunkt t3
300 verschlüsselte Nachricht zum Zeitpunkt t5
400 Steuereinheit
402 Mikroprozessor
404 RAM
406 ROM
408 Kommunikationsschnittstelle
410 Zeitgeber
412 Bus / Kommunikationsinterface
1001 Empfang einer verschlüsselten Nachricht
1002 Messung der Leitungsverzögerung und Frequenzmessung starten
1003 Anfrage der letzten Leitungsmessung und Frequenzparameter
1004 Generierung des Schlüssels

1005 Entschlüsselung der Nachricht

**Patentansprüche**

1. Verfahren zur Ermittlung der Steuergerätetemperatur in einem Kraftfahrzeug (1) mittels Ethernet, bei dem folgende Schritte durchgeführt werden:

   • Bestimmen einer Laufzeit (9) eines ersten Signals (10) auf einem ersten Verbindungsweg (6) zwischen einer ersten Steuereinheit (3) des Ethernet-Bordnetzes (4) und einer zweiten Steuereinheit (4) des Ethernet-Bordnetzes (2);
   • Bestimmen einer Maximalgeschwindigkeit (11) des ersten Verbindungswegs (6) anhand der Laufzeit (9); und
   • Identifikation mindestens einer ersten Steuereinheit (3) des Ethernet-Bordnetzes (2);
   • Synchronisation von mindestens einer ersten Steuereinheit (3) des Ethernet-Bordnetzes (2);
   • Ermittlung des Synchronisationsintervalls;
   • Ermittlung eines Zeitstempels der ersten Steuereinheit (3);
   • Auslesen eines Zeitstempels oder Abfrage der Uhrzeit der ersten Steuereinheit (3);
   • Vergleich des Zeitstempels mit einer Referenzuhr des Ethernet-Bordnetzes (3);
   • Durchführung einer Laufzeitmessung (410);
   • Ermittlung der Geschwindigkeit des dazugehörigen Taktgebers;
   • Ermittlung der Zeitdifferenz des Synchronisationsintervalls;
   • Ermittlung der letzten Synchronisation

   **dadurch gekennzeichnet, dass** die folgenden Schritte durchgeführt werden:

   - Referenzmessung einer Taktrate des Taktgebers (Quarz 1) der ersten Steuereinheit (3) zu einer Taktrate des Taktgebers (Quarz 2) der zweiten Steuereinheit (4) (420);
   - Monitoring der Taktrate des Taktgebers (Quarz 1) der Steuereinheit (3) zur Taktrate des Taktgebers (Quarz 2) der Steuereinheit (4);
   - Ermittlung der Temperatur der ersten Steuereinheit (3) und der Temperatur der zweiten Steuereinheit (4);
   - Ermittlung einer der Steuereinheit -Temperaturveränderung durch die Auswertung der Referenzmessung, die durch das Senden/Empfangen von Nachrichten zur Zeitsynchronisation vorgenommen wird, in der Art, dass bestimmt wird, bei welcher Frequenz der Taktgeber (Quarz 1, 2) die ermittelten ersten und zweiten Steuereinheit - Temperaturen vorliegen.

2. Verfahren nach Anspruch 1, **dadurch gekennzeichnet, dass** die Ermittlung der Referenzmessung einer Taktrate der Steuereinheit (3) und Steuereinheit (4) mittels des Protokolls IEEE 802.1AS erfolgt.

3. Verfahren nach einem der Ansprüche 1 oder 2, **dadurch gekennzeichnet, dass** die Geschwindigkeit des Taktgebers mittels des PTP NRR Verfahren, Neighbor Rate Ratio, ermittelt wird.

4. Verfahren nach Anspruch 3, wobei nachfolgende Schritte durchgeführt werden:

   - eine fortlaufende Ermittlung und/oder Monitoring des NRR erfolgt,
   - die Laufzeitmessungen durchführen wird,
   - die Aufzeichnung der NRR erfolgt,
   - Vergleich des neu aufgezeichneten NRR mit den abgespeicherten Werten, erfolgt,

   wobei eine Überprüfung erfolgt, ob der NRR größer ist als der letzte aufgezeichnete Wert und bei Vorliegen eines größeren Wertes des NRR überprüft wird, um welchen Faktor der NRR größer ist als der letzte Wert des NRR und dann der Temperaturanstieg berechnen wird. und bei Vorliegen eines NRR Wertes der kleiner ist als der letzte Wert, dann ein Temperaturabfall berechnet wird.

5. Verfahren nach einem der Ansprüche 1 bis 4, **dadurch gekennzeichnet, dass** die Art des Übertragungsmediums (12) und die

   - Ermittlung des Synchronisationsintervalls
   - Ermittlung eines Drifts eines Zeitgebers (410) der ersten Steuereinheit (3)
   - Ermittlung eines Zeitstempels der ersten Steuereinheit (3)
   - Ermittlung der Geschwindigkeit des dazugehörigen Taktgebers
   - Ermittlung der Zeitdifferenz des Synchronisationsintervalls
   - Ermittlung der letzten Synchronisation

   einem Programm (13) im Ethernet-Bordnetz (2) mitgeteilt wird und eine Verbindungswegwahl (14) des Programms (13) abhängig von der Art des Übertragungsmediums (12) angepasst wird.

6. Verfahren nach einem der Ansprüche 1 bis 5, **dadurch gekennzeichnet, dass** die Art des Übertragungsmediums (12) als optisch, Kupfer oder drahtlos bestimmt wird.

7. Verfahren nach einem der vorhergehenden Ansprüche, **dadurch gekennzeichnet, dass** dem ersten Verbindungsweg (6) anhand der Art des Übertragungsmediums (12) ein Übertragungssicherheitswert (15), welcher eine Verlustwahrscheinlichkeit von über den ersten Verbindungsweg (6) übertragenen Daten beschreibt, zugewiesen wird.

8. Verfahren nach einem der vorhergehenden Ansprüche, **dadurch gekennzeichnet, dass** Laufzeiten von einer Mehrzahl von Signalen auf dem ersten Verbindungsweg (6) bestimmt werden und die schnellste Laufzeit der Mehrzahl der Signale ausgewählt wird, wobei die Maximalgeschwindigkeit (11) des ersten Verbindungsweges (6) anhand der schnellsten Laufzeit bestimmt wird.

9. Verfahren nach einem der vorhergehenden Ansprüche, **dadurch gekennzeichnet, dass** eine Laufzeit (16) eines zweiten Signals (17) auf einen vom ersten Verbindungsweg (6) unterschiedlichen zweiten Verbindungsweg (7) zwischen der ersten Steuereinheit (3) und der zweiten Steuereinheit (4) bestimmt wird, und eine Maximalgeschwindigkeit (11) des zweiten Verbindungswegs (7) bestimmt wird, wobei eine Art des Übertragungsmediums (19) des zweiten Verbindungsweges (7) anhand der Maximalgeschwindigkeit (11) des zweiten Verbindungsweges (7) bestimmt wird.

10. Verfahren nach einem der vorhergehenden Ansprüche, **dadurch gekennzeichnet, dass** das Verfahren nach einem Wechsel der ersten Steuereinheit (3) von einem Normalbetriebsmodus in einen Energiesparmodus und/oder vom Energiesparmodus in den Normalbetriebsmodus ausgeführt wird.

11. Verfahren nach einem der vorhergehenden Ansprüche, **dadurch gekennzeichnet, dass** die Laufzeit (9) des ersten Signals (10) mit der ersten Steuereinheit (3) bestimmt wird und eine Laufzeit (21) eines dritten Signals (22) auf einem indirekt mit der ersten Steuereinheit (3) verbundenen dritten Verbindungsweg (8) zwischen der zweiten Steuereinheit (4) und einer dritten Steuereinheit (5) des Ethernet-Bordnetzes (2) mit der dritten Steuereinheit (5) bestimmt wird, wobei die Bestimmung der Laufzeit (21) des dritten Signals (22) durch eine von der ersten Steuereinheit (3) an die dritte Steuereinheit (5) gesendete Dienst-Nachricht (20) ausgelöst wird.

12. Steuereinheit für ein Ethernet-Bordnetz (2), welche als erste Steuereinheit (3) dazu ausgebildet ist:

   - ein Signal (10) an eine zweite Steuereinheit (4) des Ethernet-Bordnetzes (2) zu senden und das Signal (10) von der zweiten Steuereinheit (4) zu empfangen;
   - eine Laufzeit (9) des Signals (10) auf einem Verbindungsweg (6) zur zweiten Steuereinheit (4) zu bestimmen;
   - eine Maximalgeschwindigkeit (11) des Verbindungswegs (6) anhand der Laufzeit (9) zu bestimmen; und

- eine Art eines Übertragungsmediums (12) des Verbindungswegs (6) anhand der Maximalgeschwindigkeit (11) zu bestimmen, mindestens umfasst

- einen Mikroprozessor (402),

- einen flüchtigen Speicher (404) und nichtflüchtigen Speicher (406),

- mindestens zwei Kommunikationsschnittstellen (408),

- einen synchronisierbaren Zeitgeber 410, der nichtflüchtige Speicher (406) Programminstruktionen enthält die, wenn sie von dem Mikroprozessor (402) ausgeführt werden, **dadurch gekennzeichnet, dass** zumindest eine Ausgestaltung des Verfahrens nach Anspruch 1 bis 11 implementierbar und ausführbar ist.

13. Ethernet-Bordnetz (2) für ein Kraftfahrzeug (1), mit einer ersten Steuereinheit (3) und einer zweiten Steuereinheit (4), wobei die Steuereinheiten (3, 4) über zumindest einen Verbindungsweg (6, 7) miteinander verbunden sind, und die erste Steuereinheit (3) gemäß Anspruch 12 ausgebildet ist.

14. Ethernet-Bordnetz nach Anspruch 13, **dadurch gekennzeichnet, dass** das Ethernet-Bordnetz (2) eine dritte Steuereinheit (5) aufweist, welche indirekt mit der ersten Steuereinheit (3) verbunden ist und über einen dritten Verbindungsweg (8) direkt mit der zweiten Steuereinheit (4) verbunden ist, wobei die dritte Steuereinheit (5) dazu ausgebildet ist, eine Laufzeit (21) eines dritten Signals (22) auf dem dritten Verbindungsweg (8) zu bestimmen, wobei die erste Steuereinheit (3) dazu ausgebildet ist, die Bestimmung der Laufzeit (21) des dritten Signals (22) durch eine Dienstnachricht (20) an die dritte Steuereinheit (5) auszulösen.

15. Computerprogrammprodukt umfassend Befehle, die bei der Ausführung des Programms durch einen Computer diesen veranlassen, das Verfahren (200) nach einem oder mehreren der Ansprüche 1 - 11 auszuführen.

16. Computerlesbareres Medium, auf dem das Computerprogrammprodukt nach Anspruch 15 gespeichert ist.

17. Fahrzeug mit mehreren Steuereinheiten (3, 4, 5) nach Anspruch 12 umfassendes Ethernet-Bordnetzwerk.

## Claims

1. Method for ascertaining the control unit temperature in a motor vehicle (1) by means of Ethernet, wherein the following steps are carried out:

• determining a delay time (9) of a first signal (10) on a first connecting path (6) between a first control unit (3) of the Ethernet onboard network (4) and a second control unit (4) of the Ethernet onboard network (2);

• determining a maximum speed (11) of the first connecting path (6) on the basis of the delay time (9); and

• identifying at least a first control unit (3) of the Ethernet onboard network (2);

• synchronizing at least a first control unit (3) of the Ethernet onboard network (2);

• ascertaining the synchronization interval;

• ascertaining a timestamp of the first control unit (3);

• reading a timestamp or querying the time of the first control unit (3);

• comparing the timestamp with a reference clock of the Ethernet onboard network (3);

• carrying out a delay time measurement (410);

• ascertaining the speed of the associated clock generator;

• ascertaining the time difference of the synchronization interval;

• ascertaining the last synchronization,

**characterized in that** the following steps are carried out:

- reference measurement of a clock rate of the clock generator (crystal 1) of the first control unit (3) with respect to a clock rate of the clock generator (crystal 2) of the second control unit (4) (420);

- monitoring the clock rate of the clock generator (crystal 1) of the control unit (3) with respect to the clock rate of the clock generator (crystal 2) of the control unit (4);

- ascertaining the temperature of the first control unit (3) and the temperature of the second control unit (4);

- ascertaining a control unit temperature change by evaluating the reference measurement, effected by sending/receiving messages for time synchronization, by way of determining at which frequency of the clock generators (crystal 1, 2) the ascertained first and second control unit temperatures are present.

2. Method according to Claim 1, **characterized in that** the reference measurement of a clock rate of the control unit (3) and control unit (4) is ascertained by means of the IEEE 802.1AS protocol.

3. Method according to either of Claims 1 and 2, **char-**

acterized in that the speed of the clock generator is ascertained by means of the PTP NRR (Neighbour Rate Ratio) method.

4. Method according to Claim 3, wherein the following steps are carried out:

- the NRR is continuously ascertained and/or monitored,
- the delay time measurement is carried out,
- the NRR is recorded,
- the newly recorded NRR is compared with the stored values,

wherein a check is made to establish whether the NRR is greater than the last recorded value and, if a greater value of the NRR is present, the factor by which the NRR is greater than the last value of the NRR is checked and then the temperature increase is calculated and, if an NRR value that is less than the last value is present, then a temperature decrease is calculated.

5. Method according to any of Claims 1 to 4, **characterized in that** the type of the transmission medium (12) and the

- ascertainment of the synchronization interval
- ascertainment of a drift of a timer (410) of the first control unit (3)
- ascertainment of a timestamp of the first control unit (3)
- ascertainment of the speed of the associated clock generator
- ascertainment of the time difference of the synchronization interval
- ascertainment of the last synchronization

are communicated to a program (13) in the Ethernet onboard network (2) and a connecting path selection (14) of the program (13) is adapted on the basis of the type of the transmission medium (12).

6. Method according to any of Claims 1 to 5, **characterized in that** the type of the transmission medium (12) is determined as optical, copper or wireless.

7. Method according to any of the preceding claims, **characterized in that** a transmission security value (15), which describes a probability of loss of data transmitted by way of the first connecting path (6), is assigned to the first connecting path (6) on the basis of the type of the transmission medium (12).

8. Method according to any of the preceding claims, **characterized in that** delay times of a plurality of signals on the first connecting path (6) are determined and the fastest delay time of the plurality of signals is selected, the maximum speed (11) of the first connecting path (6) being determined on the basis of the fastest delay time.

9. Method according to any of the preceding claims, **characterized in that** a delay time (16) of a second signal (17) on a second connecting path (7), which is different from the first connecting path (6), between the first control unit (3) and the second control unit (4) is determined, and a maximum speed (11) of the second connecting path (7) is determined, a type of the transmission medium (19) of the second connecting path (7) being determined on the basis of the maximum speed (11) of the second connecting path (7).

10. Method according to any of the preceding claims, **characterized in that** the method is performed after the first control unit (3) changes from a normal operating mode to an energy-saving mode and/or from the energy-saving mode to the normal operating mode.

11. Method according to any of the preceding claims, **characterized in that** the delay time (9) of the first signal (10) is determined using the first control unit (3) and a delay time (21) of a third signal (22) on a third connecting path (8), which is connected to the first control unit (3) indirectly, between the second control unit (4) and a third control unit (5) of the Ethernet onboard network (2) is determined using the third control unit (5), the determination of the delay time (21) of the third signal (22) being triggered by a service message (20) sent from the first control unit (3) to the third control unit (5).

12. Control unit for an Ethernet onboard network (2), which, as first control unit (3), is designed:

- to send a signal (10) to a second control unit (4) of the Ethernet onboard network (2) and to receive the signal (10) from the second control unit (4);
- to determine a delay time (9) of the signal (10) on a connecting path (6) to the second control unit (4);
- to determine a maximum speed (11) of the connecting path (6) on the basis of the delay time (9); and
- to determine a type of a transmission medium (12) of the connecting path (6) on the basis of the maximum speed (11),
and at least includes
- a microprocessor (402),
- a volatile memory (404) and nonvolatile memory (406),
- at least two communication interfaces (408),
- a synchronizable timer 410,

the nonvolatile memory (406) containing program instructions that, when executed by the microprocessor (402), **characterized in that** at least one embodiment of the method according to Claims 1 to 11 is implementable and executable.

13. Ethernet onboard network (2) for a motor vehicle (1), having a first control unit (3) and a second control unit (4), wherein the control units (3, 4) are connected to one another by way of at least one connecting path (6, 7), and the first control unit (3) is in a form according to Claim 12.

14. Ethernet onboard network according to Claim 13, **characterized in that** the Ethernet onboard network (2) comprises a third control unit (5), which is connected to the first control unit (3) indirectly and is connected to the second control unit (4) directly by way of a third connecting path (8), wherein the third control unit (5) is designed to determine a delay time (21) of a third signal (22) on the third connecting path (8), wherein the first control unit (3) is designed to trigger the determination of the delay time (21) of the third signal (22) by way of a service message (20) to the third control unit (5).

15. Computer program product comprising instructions that, when the program is executed by a computer, cause said computer to perform the method (200) according to one or more of Claims 1 - 11.

16. Computer-readable medium on which the computer program product according to Claim 15 is stored.

17. Vehicle having an Ethernet onboard network comprising multiple control units (3, 4, 5) according to Claim 12.

**Revendications**

1. Procédé pour déterminer la température d'un appareil de commande dans un véhicule automobile (1) au moyen d'Ethernet, dans lequel les étapes suivantes sont mises en œuvre :

   • détermination d'un temps de propagation (9) d'un premier signal (10) sur une première voie de connexion (6) entre une première unité de commande (3) du réseau Ethernet embarqué (4) et une deuxième unité de commande (4) du réseau Ethernet embarqué (2) ;
   • détermination d'une vitesse maximale (11) de la première voie de connexion (6) à l'aide du temps de propagation (9) ; et
   • identification d'au moins une première unité de commande (3) du réseau embarqué Ethernet (2) ;
   • synchronisation d'au moins une première unité de commande (3) du réseau embarqué Ethernet (2) ;
   • détermination de l'intervalle de synchronisation ;
   • détermination d'un horodatage de la première unité de commande (3) ;
   • lecture d'un horodatage ou interrogation de l'heure de la première unité de commande (3) ;
   • comparaison de l'horodatage avec une horloge de référence du réseau embarqué Ethernet (3) ;
   • réalisation d'une mesure du temps de propagation (410) ;
   • détermination de la vitesse du générateur d'horloge correspondant ;
   • détermination de la différence de temps de l'intervalle de synchronisation ;
   • détermination de la dernière synchronisation,

   **caractérisé en ce que** les étapes suivantes sont mises en œuvre :

   - mesure de référence d'une fréquence d'horloge du générateur d'horloge (Quarz 1) de la première unité de commande (3) par rapport à une fréquence d'horloge du générateur d'horloge (Quarz 2) de la deuxième unité de commande (4) (420) ;
   - surveillance de la fréquence d'horloge du générateur d'horloge (Quarz 1) de l'unité de commande (3) par rapport à la fréquence d'horloge du générateur d'horloge (Quarz 2) de l'unité de commande (4) ;
   - détermination de la température de la première unité de commande (3) et de la température de la deuxième unité de commande (4) ;
   - détermination d'une variation de température d'unité de commande par l'évaluation de la mesure de référence effectuée par l'envoi/la réception de messages pour la synchronisation temporelle, de manière à déterminer à quelle fréquence des générateurs d'horloge (Quarz 1, 2) sont présentes les première et deuxième températures déterminées des unités de commande.

2. Procédé selon la revendication 1, **caractérisé en ce que** la détermination de la mesure de référence d'une fréquence d'horloge de l'unité de commande (3) et de l'unité de commande (4) s'effectue au moyen du protocole IEEE 802.1AS.

3. Procédé selon l'une des revendications 1 et 2, **caractérisé en ce que** la vitesse du générateur d'horloge est déterminée en utilisant le procédé PTP NRR, Neighbor Rate Ratio.

**4.** Procédé selon la revendication 3, dans lequel les étapes suivantes sont mises en œuvre :

- une détermination et/ou surveillance continue du NRR est effectuée,
- les mesures de durée sont effectuées,
- l'enregistrement du NRR a lieu,
- la comparaison du NRR nouvellement enregistré avec les valeurs enregistrées a lieu,

dans lequel une vérification est effectuée pour déterminer si le NRR est supérieur à la dernière valeur enregistrée et en présence d'une valeur plus élevée du NRR, le facteur par lequel le NRR est supérieur à la dernière valeur du NRR est vérifié, puis l'augmentation de température est calculée, et en présence d'une valeur de NRR qui est inférieure à la dernière valeur, une baisse de température est alors calculée.

**5.** Procédé selon l'une des revendications 1 à 4, **caractérisé en ce que** le type de support de transmission (12) et la

- détermination de l'intervalle de synchronisation,
- détermination d'une dérive d'une horloge (410) de la première unité de commande (3),
- détermination d'un horodatage de la première unité de commande (3),
- détermination de la vitesse du générateur d'horloge correspondant,
- détermination de la différence de temps de l'intervalle de synchronisation,
- détermination de la dernière synchronisation,

sont communiquées à un programme (13) dans le réseau Ethernet embarqué (2) et une sélection de voie de connexion (14) du programme (13) est adaptée en fonction du type de support de transmission (12).

**6.** Procédé selon l'une des revendications 1 à 5, **caractérisé en ce que** le type de support de transmission (12) est défini comme étant optique, par cuivre ou sans fil.

**7.** Procédé selon l'une des revendications précédentes, **caractérisé en ce qu'**une valeur (15) de sécurité de transmission, qui décrit une probabilité de perte de données transmises via la première voie de connexion (6), est attribuée à la première voie de connexion (6) en fonction du type de support de transmission (12).

**8.** Procédé selon l'une des revendications précédentes, **caractérisé en ce que** les temps de propagation d'une pluralité de signaux sur la première voie de connexion (6) sont déterminés et le temps de propagation le plus rapide parmi la pluralité des signaux est sélectionné, la vitesse maximale (11) de la première voie de connexion (6) étant déterminée au moyen du temps de propagation le plus rapide.

**9.** Procédé selon l'une des revendications précédentes, **caractérisé en ce qu'**un temps de propagation (16) d'un deuxième signal (17) sur une deuxième voie de connexion (7) différente de la première voie de connexion (6) entre la première unité de commande (3) et la deuxième unité de commande (4) est déterminé, et une vitesse maximale (11) de la deuxième voie de connexion (7) est déterminée, un type de support de transmission (19) de la deuxième voie de connexion (7) étant déterminé au moyen de la vitesse maximale (11) de la deuxième voie de connexion (7).

**10.** Procédé selon l'une des revendications précédentes, **caractérisé en ce que** le procédé est exécuté après un basculement de la première unité de commande (3) d'un mode de fonctionnement normal à un mode d'économie d'énergie et/ou du mode d'économie d'énergie au mode de fonctionnement normal.

**11.** Procédé selon l'une des revendications précédentes, **caractérisé en ce que** le temps de propagation (9) du premier signal (10) est déterminé par la première unité de commande (3) et un temps de propagation (21) d'un troisième signal (22) sur une troisième voie de connexion (8) reliée indirectement à la première unité de commande (3) entre la deuxième unité de commande (4), et une troisième unité de commande (5) du réseau Ethernet embarqué (2) est déterminée au moyen de la troisième unité de commande (5), la détermination du temps de propagation (21) du troisième signal (22) étant déclenchée par un message de service (20) envoyé par la première unité de commande (3) à la troisième unité de commande (5).

**12.** Unité de commande pour un réseau Ethernet embarqué (2), qui, en tant que première unité de commande (3), est conçue pour :

- envoyer un signal (10) à une deuxième unité de commande (4) du réseau Ethernet embarqué (2), et recevoir le signal (10) en provenance de la deuxième unité de commande (4) ;
- déterminer un temps de propagation (9) du signal (10) sur une voie de connexion (6) vers la deuxième unité de commande (4) ;

-- déterminer une vitesse maximale (11) de la voie de connexion (6) à l'aide du temps de propagation (9) ; et

- déterminer un type de support de transmission (12) de la voie de connexion (6) au moyen de la vitesse maximale (11),

comprend au moins

- un microprocesseur (402),
- une mémoire volatile (404) et une mémoire non volatile (406),
- au moins deux interfaces de communication (408),
- une horloge synchronisable (410),

la mémoire non volatile (406) contenant des instructions de programme qui, lorsqu'elles sont exécutées par le microprocesseur (402), **caractérisé en ce qu'**au moins une configuration du procédé selon les revendications 1 à 11 est implémentable et exécutable.

13. Réseau Ethernet embarqué (2) pour un véhicule automobile (1), comprenant une première unité de commande (3) et une deuxième unité de commande (4), les unités de commande (3, 4) étant reliées entre elles par au moins une voie de connexion (6, 7), et la première unité de commande (3) étant conçue selon la revendication 12.

14. Réseau Ethernet embarqué selon la revendication 13, **caractérisé en ce que**

le réseau Ethernet embarqué (2) comprend une troisième unité de commande (5) qui est reliée indirectement à la première unité de commande (3) et est reliée directement à la deuxième unité de commande (4) par une troisième voie de connexion (8), la troisième unité de commande (5) étant conçue pour déterminer un temps de propagation (21) d'un troisième signal (22) sur la troisième voie de connexion (8), la première unité de commande (3) étant conçue pour déclencher la détermination du temps de propagation (21) du troisième signal (22) par un message de service (20) à la troisième unité de commande (5).

15. Produit programme d'ordinateur comprenant des instructions qui, lors de l'exécution du programme par un ordinateur, amènent celui-ci à mettre en œuvre le procédé (200) selon une ou plusieurs des revendications 1 à 11.

16. Support lisible par ordinateur sur lequel est enregistré le produit programme d'ordinateur selon la revendication 15.

17. Véhicule à réseau Ethernet embarqué comprenant plusieurs unités de commande (3, 4, 5) selon la revendication 12.

## FIG 1a

## FIG 1b

## FIG 2

- Identifikation einer Komponente (ECU/µC/...)
- Synchronisation (mit einer ECU oder einer CPU oder einem Steuergerät) und Ermittlung des Driftes dessen Uhr
- Ermittlung des Synchronisationsintervalls
- Ermittlung der Abweichung in Frequenzdrift und Zeit
- Ermittlung eines Zeitstempels der ersten Steuereinheit
- Auslesen eines Zeitstempels oder Abfrage der Uhrzeit
- Vergleich des Zeitstempels mit einer Referenzuhr
- Durchführung von Laufzeitmessungen
- Ermittlung der Geschwindigkeit dessen Taktgebers
- Ermittlung der Geschwindigkeit dessen Taktgebers
- Ermittlung des Synchronisationsintervalls
- Ermittlung der letzten erfolgreichen Synchronisation

# FIG 3

EP 4 256 730 B1

FIG 4

Referenzuhr, z.B.
Von einer Sensorfusion

Uhr/Takt des Sensors
(synchron nur zu Sync-Zeitpunkten)

Ungenauigkeit

Sync-Intervall | Sync-Intervall | Sync-Intervall | Sync-Intervall | Sync-Intervall

Zeit

# FIG 5

Berechnung des Zeitraums der Asynchronität

Ermittlungszeitpunkt

Ungenauigkeit

Sensoruhr

Referenzuhr

Zeit

Letztmalige erfolgreiche
Synchronisation

EP 4 256 730 B1

## FIG 6a

Sensor            Sensorfusion

Pdelay_request

t1

(t1)

t2

t1n

t2n

(t1n)

## FIG 6b

| Berechnung der maximalen Abweichung | ← | Synchronisationsintervall<br>Taktgebergeschwindigkeit |

Ermittlung des Zeitpunktes der letztmaligen erfolgreichen Synchronisierung

# FIG 7

Start der Verzögerungsmessung

Aussenden von Linkmessungsnachrichten

Empfang von Synchronisationsnachrichten

Bestimmung der Verzögerung zum Linkpartner

Speichern des aktuellen Wertes

Zyklisch wiederholend

# FIG 8

```
┌─────────────────────────────────────────────────┐
│                     ↓                            │
│      ┌────────────────────────────────────┐      │
│      │    Start der Frequenzmessung        │      │
│      └────────────────────────────────────┘      │
│                     ↓                            │
│      ┌────────────────────────────────────┐      │
│      │ Empfang von Synchronisationsnachrichten │   │
│      └────────────────────────────────────┘      │
│                     ↓                            │
│      ┌────────────────────────────────────┐      │
│      │ Bestimmung der Nachrichtenfrequenz des │   │
│      │            Linkpartners             │      │
│      └────────────────────────────────────┘      │
│                     ↓                            │
│      ┌────────────────────────────────────┐      │
│      │    Speichern des aktuellen Wertes   │      │
│      └────────────────────────────────────┘      │
│                     │                            │
└─────────────────────┘
```

Zyklisch wiederholend

FIG 9

Generierung des Schlüssels

Berechnung von Linkmessung und Frequenz A1

Generierung des Schlüssels aus A1

Verschlüsselung der Nachricht

Versenden der Nachricht

Entschlüsselung der Nachricht

Berechnung von Linkmessung und Frequenz A2

Zyklisch wiederholend

FIG 10

```
┌─────────────────────────────┐
│             S1              │
└─────────────────────────────┘
               │
               ▼
┌─────────────────────────────┐
│             S2              │
└─────────────────────────────┘
               │
               ▼
┌─────────────────────────────┐
│             S3              │
└─────────────────────────────┘
               │
               ▼
┌─────────────────────────────┐
│             S4              │
└─────────────────────────────┘
               │
               ▼
┌─────────────────────────────┐
│             S5              │
└─────────────────────────────┘
```

EP 4 256 730 B1

FIG 11

S4

S3

| 23 |
| --- |

| 24 |
| --- |

| 25 |
| --- |

| 26 |
| --- |

| 27 |
| --- |

S4

| 13 |
| --- |

| 14 |
| --- |

<

## FIG 12

S7 → S8 → S9 →

FIG 13

EP 4 256 730 B1

# FIG 14

# FIG 15

```
┌─────────────────────────────────────┐
│        Empfange Sensordaten          │
└─────────────────────────────────────┘
                    │
                    ▼
┌─────────────────────────────────────┐
│     Prüfe letztmalige Synchronisation │
└─────────────────────────────────────┘
                    │
                    ▼
┌─────────────────────────────────────┐
│      Ist der Wert vertrauenswürdig   │
└─────────────────────────────────────┘
                    │
                    ▼
                  ◇◇◇                      Nein, Grenzwert überschritten
                 ◇   ◇ ──────────────────────────────────┐
                  ◇◇◇                                     │
                    │ ja                                  ▼
                    ▼                        ┌──────────────────────┐
┌─────────────────────────────────────┐     │  Daten sollten nicht  │
│       Daten können genutzt werden    │     │   verwendet werden    │
└─────────────────────────────────────┘     └──────────────────────┘
```

EP 4 256 730 B1

# FIG 16

Standard Steuereinheit

Memory

Microcontroller

I/O

3,4,5

404,404

402 und 410

412

EP 4 256 730 B1

**FIG 17**

| Empfang einer verschlüsselten Nachricht | 1001 |

Optional: Messung der Leitungsverzögerung und Frequensmessung starten — 1002

Anfrage der letzten Leitungsmessung und Frequenzparameter — 1003

Generierung des Schüssels — 1004

Entschlüsselung der Nachricht — 1005

EP 4 256 730 B1

FIG 18

EP 4 256 730 B1

FIG 19

EP 4 256 730 B1

# FIG 20

| Frame (Daten +Zeitstempel) T1 | Frame (Daten +Zeitstempel) T1 | Frame (Daten +Zeitstempel) T2 | Frame (Daten +Zeitstempel) T2 | Frame (Daten +Zeitstempel) T1 | Frame (Daten +Zeitstempel) T1 | Frame (Daten +Zeitstempel) T4 |
|---|---|---|---|---|---|---|

⇨ Eintreffen der Daten bei der Fusionseinheit/ Datenrekorder

Sortierung/Fusion/Speicherung nach auf Basis des Zeitstempels (T1)

| Frame (Daten +Zeitstempel) T1 | Frame (Daten +Zeitstempel) T1 | Frame (Daten +Zeitstempel) T1 | Frame (Daten +Zeitstempel) T1 |
|---|---|---|---|

Sortierung/Fusion/Speicherung nach auf Basis des Zeitstempels (T2)

| Frame (Daten +Zeitstempel) T2 | Frame (Daten +Zeitstempel) T2 |
|---|---|

EP 4 256 730 B1

# FIG 21

| Frame (Daten +Zeitstempel) T1 | Frame (Daten +Zeitstempel) T1 | Frame (Daten +Zeitstempel) T2 | Frame (Daten +Zeitstempel) T2 | Frame (Daten +Zeitstempel) T1 | Frame (Daten +Zeitstempel) T1 | Frame (Daten +Zeitstempel) T4 |
|---|---|---|---|---|---|---|

⇨ Eintreffen der Daten bei der Fusionseinheit/ Datenrekorder

Zeitstempel ist falsch

Daten sind ungültig bzw. liefern falsche Ergebnisse

| Frame (Daten +Zeitstempel) T1 | Frame (Daten +Zeitstempel) T1 | Frame (Daten +Zeitstempel) T1 | Frame (Daten +Zeitstempel) Falsch T1 |
|---|---|---|---|

EP 4 256 730 B1

# FIG 22

Untersuchung eines abgespeicherten Datensatzes einer Komponente (Sensordatenstrom) (z.B. Adresse, Stream, Zeitstempel) ⟵ Trigger z.B. gibt das ein Datenrekorder, Cloud-Speicher in Auftrag

↓

Prüfe letztmalige erfolgreiche Synchronisation

↓

Ermittlung des Zeitpunktes zu dem Daten das letzte Mal gültig waren

↓

Prüfe Speicher und verwerfe die nicht-korrekt-synchronen Datensätze

# FIG 1.1a

- Crystal Oscillator (XO)

# FIG 1.1b

- Temperature Compensated (TCXO)

# FIG 1.1c

- Oven Controlled (OCXO)

FIG 2.1

Temperature Behaviour for AT Cut Crystals

df / f [ppm]

Temperature [°C]

Cutting Angle [min]

........... -1
——— -2
– – – 0
–·–·– 2
——— 4
··········· 6
——— 8
– – – 10
–·–·– 12
– – – 14

EP 4 256 730 B1

# FIG 3.1

Server-ECU 2

Ethernet
PHY

TX
PLL

Quarz

Frequenz
des
Taktgebers
von ECU 1
messbar

Zur
Zeitsynchronisation

Server-ECU 1

Hitzeentwicklung

Ethernet
PHY

TX
PLL

Quarz

Hat Auswirkungen auf

PTP Protokoll

PTP Nachrichten
Zur
Zeitsynchronisation

EP 4 256 730 B1

FIG 4.1

```
┌─────────────────────────────────────────────┐
│         Laufzeitmessung durchführen          │
└─────────────────────────────────────────────┘
                       │
                       ▼
┌─────────────────────────────────────────────┐
│  Messung der Taktrate der ECU (des Quarzes) in │
│     Referenz zur eigenen (oder besten) Uhr     │
└─────────────────────────────────────────────┘
                       │
                       ▼
┌─────────────────────────────────────────────┐
│          Monitoring der Taktrate             │
└─────────────────────────────────────────────┘
                       │
                       ▼
┌─────────────────────────────────────────────┐
│   Ermittlung der ECU-Temperatur (veränderung)  │
└─────────────────────────────────────────────┘
```

## FIG 5.1a

Pdelay_request

t1

(t1)

t2

t1n

(t1n)

t2n

$$NRR = \frac{(t1n\text{-}t1)}{(t2n\text{-}t2)}$$

## FIG 5.1b

Starten der Laufzeitmessung (senden einer Pdelay-Request-Nachricht)

Nach Empfang der Antwort: Ermittlung des NRR (Neihgbor Rate Ration)

Aufzeichnung des Wertes

# FIG 6.1

EP 4 256 730 B1

```
                    ┌─────────────────────────────────┐
                    │      Monitoring des NRR          │
                    └─────────────────────────────────┘
                                    │
                                    ▼
                    ┌─────────────────────────────────┐
                    │   Laufzeitmessungen durchführen  │
                    └─────────────────────────────────┘
                                    │
                                    ▼
                    ┌─────────────────────────────────┐
                    │     Protokollierung der NRR      │
                    └─────────────────────────────────┘
                                    │
                                    ▼
                    ┌─────────────────────────────────┐
                    │  Vergleich des neu aufgezeichneten│
                    │  NRR mit den abgespeicherten Werten│
                    └─────────────────────────────────┘
                                    │
                                    ▼
```

┌──────────────────────────────┐
│ Hiermit können sprunghafte   │
│ Anstiege entdeckt werden     │
│ Parameter ist einstellbar    │
└──────────────────────────────┘

| Ist das NRR > als der letzte Wert | → | Ist das NRR < als der letzte Wert |

| Ist der NRR um Faktor x größer als der letzte Wert | | Ist der NRR um Faktor x kleiner als der letzte Wert |

| Temperaturanstieg berechnen | | Temperaturabfall berechnen |

FIG 7.1

EP 4 256 730 B1

```
┌─────────────────────────────────────┐        ┌──────────────────────────┐
│    Messung eines Referenz NRR        │◄───────│  Gegebene oder bestimmte  │
│                                      │        │   Temperatur der ECU      │
└─────────────────────────────────────┘        └──────────────────────────┘
                  │
                  ▼
┌─────────────────────────────────────┐
│  Kontinuierliche Bestimmung des Taktes │
└─────────────────────────────────────┘
                  │
                  ▼
┌─────────────────────────────────────┐
│  Ermittlung der Umgebungstemperatur  │
│     des Quarzes (ECU Gehäuse)        │
└─────────────────────────────────────┘
```

# FIG 8.1

EP 4 256 730 B1

```
┌─────────────────────────────────┐
│       Software verschieben       │
└─────────────────────────────────┘
                 │
                 ▼
┌─────────────────────────────────┐        ┌──────────────────────────────┐
│  Bestimmung der Komponente mit den │◄───────│  Bestimme über das Netzwerk  │
│  besten Ressourcenanforderungen  │        │    die Temperatur der ECU    │
└─────────────────────────────────┘        └──────────────────────────────┘
                 │
                 ▼
┌─────────────────────────────────┐
│        Auslagern der Software    │
└─────────────────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016285462 A
- WO 2014111920 A1
- DE 102015206085 A1
- DE 102016219663 A1
- US 2019205272 A1

**In der Beschreibung aufgeführte Nicht-Patentliteratur**

- IEEE 802.1AS time synchronization in a switched Ethernet based in-car network. **HYUNG-TAEK LIM et al.** VEHICULAR NETWORKING CONFERENCE (VNC). IEEE, 2011, 14